# FASCICULE DE BREVET EUROPEEN

(11) **EP 1 410 178 B1**
(45) Date de publication et mention de la délivrance du brevet: **24.05.2006**
(21) Numéro de dépôt: 02720051.8
(22) Date de dépôt: 11.03.2002
(51) Int. Cl.: G06F 9/40

(54) **PROCEDE ET SYSTEME DE GESTION DU TEMPS DANS UN SYSTEME TEMPS REEL**
VERFAHREN UND SYSTEM ZUR ZEITVERWALTUNG IN EINEM ECHTZEITSYSTEM
TIME MANAGEMENT METHOD AND SYSTEM IN A REAL-TIME SYSTEM

(30) Priorité: 12.03.2001 FR 0103334
(43) Date de publication de la demande: 21.04.2004
(73) Titulaire: CENTRE NATIONAL D'ETUDES SPATIALES, F-75001 Paris (FR)
(72) Inventeur: BOSSARD, François, F-31200 Toulouse (FR)
(74) Mandataire: de Roquemaurel, Bruno
(86) Numéro de dépôt international: PCT/FR2002/000864
(87) Numéro de publication internationale: WO 2002/077801

(56) Documents cités:
- EP-A- 0 362 903
- EP-A- 0 798 638
- WO-A-01/04743
- US-A- 5 745 756
- US-A- 5 902 352
- US-A- 6 141 412

## Description

La présente invention concerne un procédé pour la gestion du temps dans un système temps réel.

Elle s'applique notamment, mais non exclusivement, à tout système temps réel, qu'il soit embarqué ou intégré dans un équipement automatique, dont le fonctionnement repose sur une architecture logicielle et matérielle, dotée d'un système d'exploitation temps réel.

La plupart des systèmes temps réel comprennent un calculateur auquel sont connectés des senseurs et des actuateurs qui font l'interface entre le calculateur et le ou les processus physiques à contrôler. Le contrôle d'un processus est assuré par un algorithme numérique qui correspond à l'exécution par le calculateur d'un traitement logiciel de niveau dit "applicatif" intégrant les besoins de l'utilisateur. Un système temps réel complexe fait intervenir des exécutions simultanées de plusieurs traitements, un traitement étant composé d'une succession d'opérations dont certaines peuvent être exécutées en parallèle. De tels traitements peuvent être périodiques, dans le cas d'un processus physique continu, ou apériodiques s'ils sont déclenchés à la suite de l'arrivée d'événements internes ou externes. En outre, un système complexe peut être amené à changer de mode opératoire à la suite de l'arrivée d'événements normaux ou d'incidents. En d'autres termes, les traitements exécutés par un système temps réel sont amenés à évoluer au cours du temps en fonction d'états internes et externes au système.

Il s'avère que les systèmes temps réel, par la complexité des fonctions à réaliser deviennent de plus en plus coûteux à réaliser, et de plus en plus difficiles à valider.

En effet, dans un système temps réel, il est nécessaire de planifier et coordonner l'exécution des différents traitements. Plus précisément, les traitements sont déclenchés ou arrêtés à la suite de l'arrivée d'événements qui ont souvent un lien explicite avec l'heure courante ou l'écoulement d'un intervalle de temps depuis l'apparition d'une combinaison d'événements. Pour chaque traitement périodique, après avoir lancé la première itération du traitement, il faut entretenir le déclenchement périodique des autres itérations. Lors de l'exécution d'un traitement, il peut exister des contraintes de temps à respecter dans l'enchaînement des opérations du traitement, qui est alors discontinu. En outre, l'exécution d'un traitement doit généralement respecter une échéance liée à un temps de réponse, imposé par l'utilisateur comme critère de qualité de service, ou par les caractéristiques du processus physique à contrôler. En outre, la surveillance de la durée globale d'un traitement est indispensable pour s'assurer du fonctionnement correct du système. Le délai de réaction requis du système à une anomalie ou à un événement normal est souvent très court dans les modes opératoires critiques, ce qui peut nécessiter d'intervenir simultanément sur le cours de plusieurs traitements. Si on doit rapidement détecter une anomalie temporelle durant l'exécution d'un traitement, il faut envisager d'effectuer des contrôles sur les opérations qui le constituent, le plus souvent sur des limites de durée supérieures. On peut également envisager des contrôles de limites de durée inférieures. Enfin, dans certains cas, les dates d'arrivée d'événements deviennent prédictibles à partir de certaines étapes de l'évolution du système. Pour renforcer la robustesse du système, on peut donc contrôler que les dates d'arrivées effectives de ces événements se situent dans des fourchettes de temps imparties.

La gestion du temps est donc essentielle dans un système temps réel. A cet effet, il existe des composants informatiques prêts à l'emploi sous la forme de microprocesseurs ou de modules logiciels.
Ces composants peuvent se présenter sous la forme d'exécutifs temps réel cycliques, faisant intervenir une base de temps constante générant périodiquement un signal matériel déclenchant un séquenceur par un mécanisme d'interruption, le séquenceur appelant le traitement périodique défini par des tables de séquencement. Tous les temps utilisés par le système sont donc synchrones avec cette base de temps. De tels exécutifs ne font pas intervenir la notion d'activité des traitements, le lancement ou l'arrêt d'un traitement étant effectué par une mise à jour de tables de séquencement, et la synchronisation d'un traitement étant effectuée en comptant le nombre de cycles écoulés. Un changement de mode de fonctionnement est effectué en modifiant les tables de séquencement s'il affecte la période, et s'il affecte les algorithmes, le traitement doit tester une variable partagée représentant le mode de fonctionnement courant, qui a pu être mise à jour par un autre traitement.

Les exécutifs périodiques sont de moins en moins utilisés du fait qu'ils imposent une approche de conception de type synchrone très rigide. Les inconvénients majeurs de ce type d'exécutif résident dans le fait que si l'on a besoin d'une résolution temporelle fine, le quantum de la base de temps doit être petit, ce qui surcharge le processeur en temps de calcul d'une manière prohibitive. En outre, le séquencement des opérations internes à un traitement est effectué par une boucle de programme simulant une durée. Par ailleurs, ce type d'exécutif ne prévoit aucune surveillance temporelle, ni aucune surveillance du comportement des opérations.

D'autres composants peuvent se présenter sous la forme de noyaux temps réel, dans lequel les tâches sont les éléments de base de l'architecture logicielle et l'approche de conception est de type asynchrone. Dans un tel noyau temps réel, la gestion des tâches (activation, arrêt) est effectuée par l'appel de primitives du noyau temps réel.

Il s'avère difficile de concevoir une application ajustable pour obtenir un comportement temps réel des traitements qui soit prédictible. Une solution classique consiste à se ramener à un exécutif cyclique en synchronisant les traitements périodiques sur une base de temps prévue à cet effet.
Dans certains cas, le noyau peut fournir une fonction conçue pour générer des événements périodiques en se basant sur une base de temps interne non modifiable. Cette solution présente donc les mêmes inconvénients de surcharge du processeur que les exécutifs cycliques. En ce qui concerne le séquencement des opérations internes à un traitement, la synchronisation sur des délais est effectuée par appel de primitives du noyau. En ce qui concerne le changement dynamique de mode de fonctionnement, si ce changement de mode affecte la période, il est nécessaire de recalculer les paramètres destinés aux appels des fonctions temporelles fournies par le noyau. S'il modifie les algorithmes, le traitement doit également tester une variable partagée représentant le mode courant.
Les seules surveillances temporelles prévues par un noyau temps réel, portent sur les délais de garde accompagnant les primitives susceptibles de suspendre l'exécution d'une tâche. Par ailleurs, aucune observation de comportement en opération n'est prévue, les seuls moyens existants n'étant utilisables qu'en phase de développement de l'application.

D'une manière générale, les composants logiciels et matériels de l'art antérieur n'offrent que des services élémentaires. En outre, ils présentent une latitude importante au niveau fonctionnel et se situent à un niveau fonctionnel très détaillé, si bien qu'ils sont susceptibles d'engendrer des erreurs d'utilisation. Ils nécessitent donc l'intervention d'un spécialiste du temps réel. Par ailleurs, la conception d'un système à partir de tels composants souffre d'un manque d'uniformisation et varie au gré de chaque spécialiste du temps réel.

Le document US 5 902 352 décrit un composant d'ordonnancement de tâches pour un système non temps réel, capable de lancer des applications à l'échéance de compteurs.
Le document EP 0 3 62 903 décrit un mécanisme de gestion d'événements pour un environnement non temps réel et un processeur spécialisé qui contrôle l'exécution de tâches, en contrôlant l'attribution des ressources de traitement aux différentes tâches en fonction de priorités attribuées aux tâches et d'informations d'ordonnancement et d'événements.

La présente invention a pour but de supprimer les inconvénients mentionnés ci-avant. Cet objectif est atteint par la prévision d'un procédé de gestion du temps dans un système temps réel dans lequel des traitements applicatifs sont exécutés et communiquent entre eux à l'aide de commandes transmises à un système de gestion du temps, les commandes transmises par les traitements applicatifs au système de gestion du temps comprenant des commandes d'activation d'un traitement applicatif à une date d'activation déterminée, le système de gestion du temps effectuant pour chaque commande d'activation reçue des étapes de :
- prise en compte de la commande d'activation d'un traitement applicatif,
- associer à la commande un événement d'activation auquel est attribué au moins une date d'échéance de l'événement correspondant à la date d'activation du traitement applicatif, et insérer l'événement en association avec sa date d'échéance dans une liste d'événements à traiter,
- déterminer dans la liste d'événements le prochain événement à traiter en fonction des dates d'échéance respectives des événements de la liste, et activer un compteur pour qu'il se déclenche à la date d'échéance du prochain événement à traiter, et
- au déclenchement du compteur, activer le traitement applicatif associé au prochain événement à traiter.

Selon l'invention, chaque traitement applicatif comprend an moins un appel à une commande de mise en attente d'activation qui place le traitement dans un état d'attente d'activation par le système de gestion du temps, le traitement applicatif une fois activé dans un mode de fonctionnement normal exécutant des opérations normales avant d'appeler à nouveau la commande de mise en attente d'activation.

Avantageusement, les traitements applicatifs comprennent une boucle de traitement infinie dans laquelle est insérée une commande de mise en attente d'activation.

De préférence une commande d'activation d'un traitement en attente d'activation est associée à un paramètre de phase définissant l'intervalle de temps entre la date d'activation du traitement et un instant de référence.

Selon une particularité de l'invention, à l'activation d'un traitement en attente d'activation, ce procédé comprend la transmission au traitement à activer d'un paramètre d'état qui est à une valeur normale pour indiquer au traitement qu'il doit exécuter des opérations normales, ou à une valeur de fin pour indiquer au traitement au traitement qu'il doit se terminer.

Selon une autre particularité de l'invention, ce procédé comprend la fourniture par une horloge d'une date courante avec une dynamique limitée, la définition d'un instant de référence par un traitement applicatif et la mise à jour de l'instant de référence à chaque période du premier traitement périodique activé à la suite de ladite définition de l'instant de référence.

De préférence, pour activer un traitement périodique en attente d'activation, la commande d'activation est associée à un paramètre de période définissant une période d'activation du traitement, et en ce que lors de l'activation d'un traitement périodique, le système de gestion du temps insère dans une liste d'événements à traiter, un événement d'activation associé à une date d'activation égale à la date courante à laquelle est ajoutée la période du traitement.

Avantageusement, une commande d'activation d'un traitement est associée à un paramètre d'échéance définissant une durée maximale d'exécution d'un traitement, et en ce que le système de gestion du temps surveille si l'exécution du traitement est effectuée pendant cette durée.

Selon un mode de réalisation de l'invention, pour surveiller la durée d'exécution d'un traitement, le système de gestion du temps effectue les étapes consistant à :
- lors de l'activation d'un traitement, insérer dans une liste d'événements à traiter, un événement d'échéance de fin de traitement associé une date égale à la date courante à laquelle est ajoutée l'échéance du traitement,
- lors de la fin d'exécution du traitement, avant l'arrivée de l'événement d'échéance correspondant au traitement, retirer de la liste d'événements à traiter l'événement d'échéance de fin de traitement,
- lors de l'arrivée de l'événement d'échéance de fin de traibemeat, la transmission à un traitement superviseur d'un message de dépassement d'échéance.

Avantageusement si un traitement en cours d'exécution est activé avant la fin de sa durée maximale d'exécution, le système de gestion du temps surveille si l'exécution du traitement est effectuée pendant une durée égale à n fois la durée maximale d'exécution dudit traitement, à partir de la date de première exécution dudit traitement, n étant le nombre d'activations dudit traitement effectuées les unes à la suite des autres.

Selon un autre mode de réalisation de l'invention, ce procédé comprend pour chaque traitement, l'enregistrement dans un relevé d'observations datées, de toutes les actions effectuées par le système de gestion du temps pour mettre le traitement en attente d'activation ou le sortir d'une attente d'activation.

Avantageusement, l'enregistrement de relevés d'observations est activé par une directive de compilation de code source lors de l'élaboration du système.

Selon un autre mode de réalisation de l'invention, ce procédé comprend en outre la déclaration auprès du système de gestion du temps d'un traitement superviseur, et la prise en compte immédiate ou temporisée par le traitement superviseur d'événements émis par les autres traitements, le traitement superviseur étant activé à cet effet par le système de gestion du temps.

De préférence, il comprend la notification d'un événement par un traitement au traitement superviseur, cette notification étant associée à un délai maximum jusqu'à la notification suivante d'un autre événement effectuée par le même traitement après une séquence d'instructions dont l'exécution est à surveiller, et l'émission par le système de gestion du temps au traitement superviseur, d'un message de dépassement d'échéance partielle, si l'exécution de la séquence d'instructions n'est pas effectuée dans le délai maximum.

Également de préférence, le système de gestion du temps surveille la durée mise par le traitement superviseur pour traiter un événement ou un message d'erreur, et en cas de dépassement d'un délai maximal, il appelle un traitement d'urgence.

Selon un autre mode de réalisation de l'invention, ce procédé comprend en outre une étape de changement de mode de fonctionnement synchronisé, comprenant le blocage de l'activation de traitements concernés par le changement de mode, et l'activation de ces traitements avec des paramètres temporels correspondant au nouveau mode de fonctionnement et un paramètre de mode pour indiquer aux traitements dans quel mode ils doivent fonctionner.

L'invention concerne également un système temps réel comprenant des traitements applicatifs, une unité de traitement, un système d'exploitation temps réel et une horloge temps réel, et un système de gestion du temps rassemblant des mécanismes pour activer et désactiver les traitements applicatifs à des instants déterminés, et surveiller l'exécution de ceux-ci, ces mécanismes étant réalisés d'une manière indépendante de l'unité de traitement, du système d'exploitation et de l'horloge.

Selon l'invention, chaque traitement applicatif comprend au moins un appel à une commande de mise en attente d'activation qui place le traitement dans un état inactif dans lequel il est en attente d'activation par le système de gestion du temps, chaque traitement applicatif présentant en outre au moins un état actif dans lequel il exécute des opérations normales, avant d'appeler à nouveau la commande de mise en attente d'activation, et un état de terminaison dans lequel il exécute des opérations de terminaison avant de se terminer.

Selon un mode de réalisation de l'invention, ce système temps réel comprend une interface entre les traitements applicatifs et le système de gestion du temps, cette interface rassemblant des fonctions de gestion du temps appelées par les traitements applicatifs.

Avantageusement, l'interface entre les traitements applicatifs et le système de gestion du temps comprend une fonction d'attente d'activation par laquelle le traitement qui l'appelle est placé à l'état inactif, et une fonction de déclenchement d'un traitement pour déclencher l'exécution d'un traitement à l'état inactif.
De préférence, la fonction de déclenchement d'un traitement reçoit en paramètres d'entrée un paramètre indiquant la date à laquelle l'exécution du traitement doit être déclenchée, un paramètre de période indiquant une période d'exécution si le traitement est périodique, un paramètre d'échéauce déterminant la durée maximale d'exécution du traitement, un paramètre d'état indiquant si le traitement doit être exécuté normalement ou se terminer, et un paramètre de mode caractérisant l'exécution ou la terminaison du traitement.

Selon un autre mode de réalisation de l'invention, l'interface entre les traitements applicatifs et le système de gestion du temps comprend une fonction de gel de traitement pour empêcher l'activation d'un traitement en attente d'activation ou signaler le retour d'un traitement à l'état inactif si celui-ci n'est pas en attente d'activation.

Selon un autre mode de réalisation de l'invention, tous les accès nécessaires au système de gestion du temps aux fonctions du système d'exploitation et de l'horloge sont regroupés dans des interfaces réalisées en fonction du système d'exploitation, de l'unité de traitement et de l'horloge.

Selon encore un autre mode de réalisation de l'invention, ce système comprend en outre un chien de garde pour surveiller l'exécution des opérations effectuées par le système de gestion du temps, et dont la mise à jour est synchronisée sur la commande d'un compteur destiné à déclencher le prochain événement à traiter.

Un mode de réalisation préféré de l'invention sera décrit ci-après, à titre d'exemple non limitatif, avec référence aux dessins annexés dans lesquels :
La figure 1 représente l'architecture générale d'un système utilisant le système de gestion du temps selon l'invention ;
La figure 2 représente l'enchaînement des différents états d'un traitement périodique, selon l'invention ;
Les figures 3 à 6 illustrent différentes utilisations du système de gestion selon l'invention ;
La figure 7 illustre sous la forme de chronogrammes l'enchaînement de différents traitements par le système de gestion du temps selon l'invention.

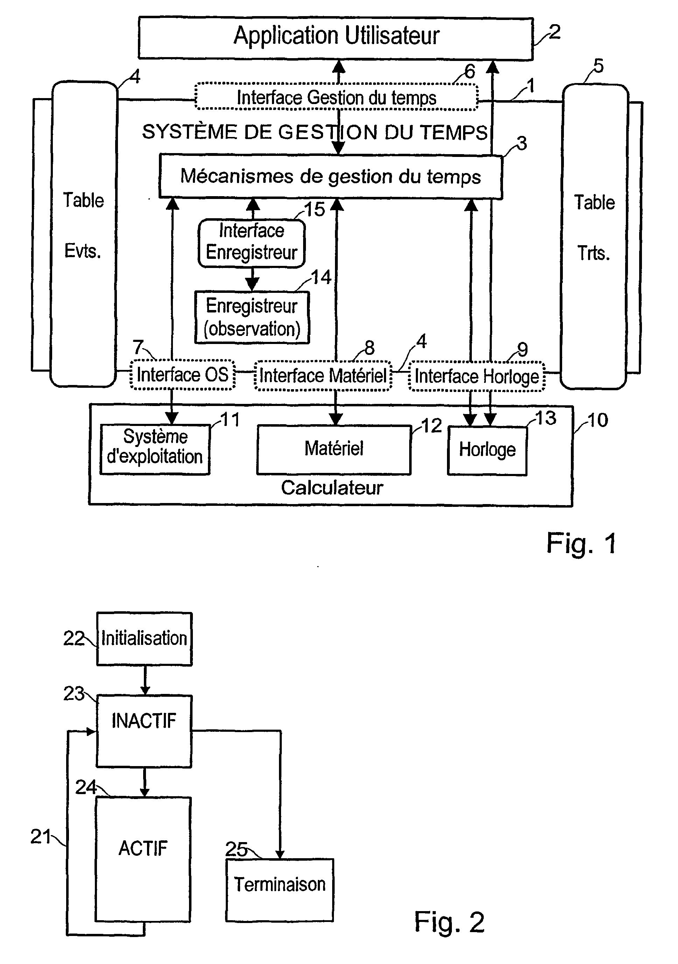

Sur la figure 1, le système selon l'invention est constitué de composants logiciels et matériels répartis en trois couches. La couche supérieure contient l'application temps réel 2 réalisant les fonctions définies par l'utilisateur, la couche intermédiaire comprend un système de gestion du temps 1 selon l'invention qui offre à l'application utilisateur 2 les services dont elle a besoin pour gérer le temps, ces services étant regroupés dans une interface utilisateur 6 et faisant appel à des mécanismes 3 internes au système 1.
Toutes les ressources matérielles et logicielles de bas niveau, c'est-à-dire le calculateur 10, sont situées dans la couche inférieure qui comprend des ressources matérielles 12 comportant notamment une unité de traitement, un système d'exploitation 11 de l'unité de traitement, par exemple constitué d'un noyau temps réel ou d'un exécutif temps réel, et un service d'horloge 13 fournissant des temps absolus.

Le système d'exploitation 11 offre des services de bas niveau, et en particulier des mécanismes de synchronisation et un mécanisme de répartition des ressources matérielles entre les différents traitements, couramment appelé ordonnanceur.

En vue de le rendre portable vers d'autres environnements matériels et réutilisable pour d'autres applications, le système de gestion du temps 1 est réalisé de préférence de manière générique, c'est-à-dire d'une manière indépendante des ressources matérielles et logicielles de bas niveau, utilisées par l'application 2. A cet effet, il fait appel à une interface 7 avec le noyau temps réel 11, regroupant tous les services de bas niveau appelés par le système de gestion du temps 1, notamment pour réaliser les services utilisateur regroupés dans l'interface 6. Il fait également appel à une interface 8 avec le matériel, cette interface regroupant tous les services rendus par l'unité de traitement 12, appelés par le système de gestion du temps 1, et une interface 9 avec l'horloge 13.

Tous les traitements de l'application 2, dont il faut gérer les déclenchements d'exécution et les arrêts, sont définis dans une table 5 rassemblant leurs noms ou identificateurs respectifs. Chaque traitement possède donc un identificateur unique défini par l'utilisateur de manière statique dans la table des traitements 5 qui est partagée par les différentes couches de l'architecture du système. De cette manière chaque traitement peut être reconnu à la fois par le système de gestion du temps 1 et par l'application 2. La table des traitements 5 permet à l'utilisateur d'utiliser un système de nommage propre, au lieu des identificateurs propres au noyau temps réel 11, ce qui évite les confusions. D'autre part, cette table permet regrouper les traitements ou tâches dans des classes et des sous-classes d'après leurs propriétés. On peut ainsi définir par exemple, la classe des utilisateurs du système de gestion du temps.

De même, tous les événements circulant entre les différents traitements de l'application 2, sont définis dans une table 4 rassemblant leurs noms ou identificateurs respectifs.

On différencie les événements liés à l'observation du déroulement des traitements, les événements liés à des contraintes temporelles d'exécution et les événements purement applicatifs introduits par l'utilisateur.
Néanmoins, l'ensemble de ces événements définis par l'utilisateur, sont associés aux traitements.

Les événements d'observation représentent les différentes transitions significatives dans le déroulement des traitements. Bien que les événements sont définis par l'utilisateur, le système de gestion du temps 1 assure l'apparition de ces événements et leurs enregistrements dans des relevés d'observations. Le rôle de ces événements est de tracer les comportements dynamiques des traitements, ainsi que les demandes d'activation.

Certains événements temporels peuvent caractériser le dépassement d'échéance pour les traitements, d'autres peuvent caractériser le dépassement d'un délai pour le franchissement d'une étape dans un traitement. Dans la limite des possibilités du système, l'utilisateur est libre de définir autant d'événements qu'il le souhaite et de disposer ainsi, de points de surveillance temporels dans son application.
L'apparition d'un événement de ce type conduit à un enregistrement dans le relevé d'observations du traitement et peut éventuellement conduire à la notification de l'événement auprès d'un traitement superviseur, s'il en existe un.

En plus des événements liés aux aspects temporels, l'utilisateur peut définir des événements d'une manière indépendante de toute considération temporelle. En effet, il peut dans un traitement décider de demander au système de gestion du temps 1 de lever un tel événement. Outre l'enregistrement de l'événement dans le relevé d'observations du traitement auteur de la requête, l'événement peut être notifié auprès d'un traitement superviseur afin que celui-ci puisse réaliser les opérations adéquates.

Il est donc nécessaire qu'au sein d'une structure, l'utilisateur définisse les différents événements qui peuvent transiter entre les traitements ou qui sont directement notifiés auprès d'un traitement spécifique, par le système de gestion du temps lui-même.

De manière générale, on distingue deux catégories d'événements :
- les événements non critiques, appelés événements de notification utilisés pour notifier le franchissement d'étapes significatives pour l'utilisateur, et transmis auprès d'un traitement superviseur si celui-ci existe, et
- les événements critiques appelés événements majeurs qui regroupent les événements définis et signalés comme tels par l'utilisateur, et les événements liés aux erreurs temporelles détectées par le système 1.

La surveillance des événements critiques nécessite d'être gérée par l'utilisateur dés qu'ils apparaissent lors de l'exécution du traitement. Une telle surveillance exige donc une rapidité dans la prise en compte de tels événements.

Bien que les mécanismes associés à ces deux catégories d'événements diffèrent, aucune distinction n'est faite dans la caractérisation générale des événements. En effet, tout événement est représenté par un identificateur unique, défini par l'utilisateur dans la table des événements 4.

Dans tous les cas, l'apparition de tels événements donne lieu à des enregistrements dans les relevés d'observations des traitements concernés.

A cet effet, la couche intermédiaire comprend également un module d'enregistrement 14 d'événements fournissant au système de gestion du temps 1 des services d'enregistrement et d'observation regroupés dans une interface enregistreur 15.

Le système de gestion du temps est conçu pour prendre en compte deux catégories de traitements, à savoir les traitements applicatifs périodiques ou apériodiques, et les traitements dits "superviseur" dont le seul objectif est d'assurer le déclenchement des traitements applicatifs et/ou la prise en compte d'événements d'exécution.

Chaque traitement est associé au moment de son déclenchement à une phase et s'il est périodique à une période.
La phase d'un traitement correspond au temps séparant un instant de référence et la demande d'activation du traitement par le système de gestion du temps au système d'exploitation. Elle permet de répartir de façon déterministe dans le temps les demandes d'activations de chacun des traitements par rapport à ce temps de référence.

La période d'exécution d'un traitement périodique est le temps dans une unité définie par le système de gestion du temps, séparant deux itérations (deux demandes d'activation) du traitement.

Pour les traitements périodiques, on définit également une échéance qui correspond au temps maximum alloué à un traitement pour s'exécuter depuis sa demande d'activation par le système 1. Dans le cas où un traitement en cours d'exécution n'a pas atteint son terme dans l'échéance impartie, un traitement appelé "superviseur" reçoit une notification de dépassement d'échéance.

D'une manière générale, les paramètres temporels renseignés lors des appels de services du système de gestion du temps 1 (phase, période, ...) doivent être exprimés dans une unité dite unité "utilisateur" que l'on définit arbitrairement, par exemple à la milliseconde (ms). Les informations de temps absolu ou de date sont exprimées dans l'unité de l'horloge bord et sont donc dépendantes de l'implémentation.
L'unité de temps utilisée par le système en interne peut être différente de l'unité utilisateur et demeure proche de l'unité de temps employée par la source physique temporelle externe. L'ordre de grandeur de cette unité est la microseconde (µs).

En outre, les traitements peuvent avoir d'autres caractéristiques complémentaires, mais celles-ci sont associées soit à des fonctionnalités spécifiques, soit à la manière dont est implémenté le système de gestion du temps 1. Il s'agit par exemple d'informations liées à la surveillance du déroulement du traitement.

Un traitement utilisateur est caractérisé par un ensemble d'états et de transitions entre ces états. Tel que représenté sur la figure 2, les états d'un traitement sont les suivants :
- initialisation 22,
- inactif 23,
- actif 24, et
- terminaison 25.

A tout instant, un traitement utilisateur est caractérisé par un et un seul de ces états. Le système de gestion du temps 1 a pour objectif de réaliser, sur sollicitation de l'utilisateur, les transitions entre ces différents états.
Ces transitions surviennent suite à l'apparition d'événements temporels détectés par le système ou suite à l'apparition d'événements applicatifs définis et introduits par l'utilisateur.

Les traitements périodiques doivent être chacun encapsulés dans une boucle infinie 21 dans laquelle l'exécution de chaque itération est soumise à une attente dans l'état inactif 23, de déclenchement par le système de gestion du temps 1 (figure 2).

Cette structure de traitement est également préférable dans le cas d'un traitement apériodique. Elle est en outre indispensable pour que le service de gestion du temps 1 puisse surveiller l'échéance du traitement.

D'une manière générale, les services de l'interface utilisateur 6, offerts par le système de gestion du temps 1 comprennent :
- des fonctions de contrôle du système de gestion du temps 1,
- des fonctions de gestion des traitements périodiques et apériodiques, et
- des fonctions de suivi temporel des traitements et de gestion des erreurs éventuelles.

Le système de gestion du temps doit pouvoir être activé et arrêté à l'initiative de l'utilisateur. Le contrôle du système comprend donc les deux fonctions suivantes :
- "Initialiser_service", et
- "Arreter_service".

La fonction "Initialiser_service" a pour objectif d'initialiser les structures internes et les mécanismes de contrôle temporel du système 1, c'est-à-dire, de définir un certain nombre de caractéristiques de fonctionnement du système 1 et de description du contexte général d'exécution du système.
Ces caractéristiques sont tributaires de l'implémentation physique et logicielle de la plate-forme cible (microprocesseur, système d'exploitation, ...) et de l'application 2. Parmi ces caractéristiques, on retrouve de façon générale le nombre maximal de traitements gérés par le système, les unités de temps employées, ainsi que la résolution et la précision temporelle. D'autres caractéristiques sont liées de façon plus précise au contexte d'implémentation, c'est-à-dire, relèvent du type de microprocesseur du calculateur ou du système d'exploitation par exemple.

La spécification de la fonction d'initialisation est standard à toutes les implémentations du système. Il en résulte que la définition des différentes caractéristiques du système est effectuée de manière statique lors de l'implémentation de celui-ci.

L'appel de cette fonction retourne un code erreur, "Ok" dans le cas où la fonction a été exécutée avec succès, ou bien "Service_deja_actif" dans le cas où le système 1 a déjà été initialisé.

La fonction "Arreter_service" permet de mettre fin à l'activité du système, à condition que l'ensemble des traitements qui lui sont confiés, soient terminés. L'utilisateur a donc la charge de procéder à l'arrêt des traitements dont la gestion a été confiée au système 1, avant d'effectuer l'appel de cette fonction.

L'appel de cette fonction retourne un code erreur "Ok" dans le cas où l'arrêt du système 1 a été effectué avec succès, ou bien "Traitement_encore_actif" si le système détecte lors de l'appel qu'un traitement au moins est non achevé, ou encore "Service_non_actif" dans le cas où le système de gestion du temps 1 n'a pas été préalablement activé.

La gestion des traitements périodiques et apériodiques comprend les fonctions suivantes :
- "Accepter_declenchement",
- "Definir_reference_temps",
- "Declencher_traitement",
- "Declencher_traitement_date",
- "Differer_traitement",
- "Differer_traitement_date",
- "Geler_traitement",
- "Terminer_traitement",
- "Declencher_traitement_complementaire", et
- "Declencher_traitement_complementaire_date".

La fonction "Accepter_declenchement" effectue la prise en charge par le système de l'activation d'un traitement périodique ou apériodique. L'appel de cette fonction entraîne le blocage du traitement à l'origine de la requête, qui passe alors dans l'état inactif 23 (figure 2), jusqu'à ce que le système 1 effectue la demande d'activation le concernant auprès du noyau temps réel. Dés qu'un autre traitement a renseigné le système 1 sur ses paramètres d'activation : phase, période, ..., le système 1 prend en charge l'activation du traitement et le libère de son attente dans les délais correspondants. Cette libération s'accompagne d'un événement transmis au traitement lui indiquant son mode d'exécution : soit il exécute normalement son traitement périodique (passage à l'état actif 24), soit il sort de la boucle et exécute une séquence de terminaison (passage à l'état de terminaison 25) dans le cas où une telle demande a été effectuée préalablement par un autre traitement.

Après une phase d'initialisation (voir figure 2), tout traitement périodique et la plupart des traitements apériodiques utilisent la fonction "Accepter_déclenchement" pour se mettre en attente de déclenchement.

Avant toute demande de déclenchement, un traitement au moins de l'application 2 doit définir le temps de référence utilisé par le système pour mettre en phase dans le temps les demandes d'activation des différents traitements.

Le système de gestion du temps 1 se réveille de lui-même, lorsque l'instant de déclenchement est atteint et met à jour ses informations de réveil. Il effectue alors auprès de l'exécutif temps réel une demande d'activation pour les traitements concernés. L'activation effective du traitement périodique, c'est-à-dire la fin de son attente sur l'appel de la fonction "Accepter_declenchement" et la poursuite de son activité, sont tributaires de la politique d'ordonnancement appliquée par l'exécutif temps réel. Le cumul des demandes de déclenchements est admis dans la mesure où l'implémentation l'accepte. Si le seuil de cumul est franchi, une erreur est signalée au superviseur.
Une fois que le traitement concerné est activé par l'ordonnanceur de l'exécutif, celui-ci sort de l'appel "Accepter_declenchement" (passage de l'état inactif 23 à l'état actif 24 ou de terminaison 25), et s'exécute (état 24) avant de revenir en position d'attente (état 23) en appelant à nouveau la fonction "Accepter_declenchement", ou bien se termine en exécutant ses instructions de terminaison à l'état 25.
Dans le cas d'une activation périodique, un nouveau déclenchement est programmé par le système 1 pour se produire au début de la prochaine période.

L'état demandé pour ce traitement est retourné sous la forme d'un événement par l'appel de la fonction, qui prend comme valeur l'un des identificateurs réservés dans la table des événements 4 pour les besoins du déclenchement.
Les identificateurs d'événements utilisés par cette fonction sont par exemple :
- "Fin_normale" lorsqu'une demande d'arrêt a été effectuée par un autre traitement auprès du système 1,
- "Fin_anormale" lorsqu'une demande d'arrêt sur anomalie a été effectuée par un autre traitement auprès du système 1 ; le traitement doit alors se terminer par une séquence spécifique,
- "Normal" lorsqu'une demande d'activation a été effectuée par un autre traitement pour passer dans un mode appelé "Normal", et
- "Reconfiguration" lorsqu'une demande d'activation a été effectuée par un autre traitement pour passer dans un mode de reconfiguration.

Cette fonction retourne également un code d'erreur qui peut prendre comme valeur "Ok" pour indiquer que le traitement a été activé et que son exécution peut être poursuivie, ou bien "Service_non_actif" pour signifier que le système de gestion du temps 1 n'a pas été préalablement activé.

Au niveau programmation, l'appel de la fonction "Accepter_declenchement" s'insère dans le modèle suivant :
*debut du traitement*
*opérations d'initialisation*
*boucle infinie*
*appel fonction Accepter_declenchement*
*si le message provenant du système est Fin_Normale ou Fin_Anormale*
*alors :*
*sortir de la boucle*
*sinon*
*opérations du traitement périodique*
*fin si*
*fin boucle*
*opérations finales (éventuellement en fonction du message de terminaison*
*"Fin_normale" ou "Fin_anormale")*
*fin de traitement*

La fonction "Definir_reference_temps" permet de définir l'instant de référence initial utilisé pour les déclenchements des traitements (demandes d'activation) confiés au système. Cet instant qui est exprimé dans l'unité de l'horloge bord 13, est fourni par l'utilisateur lors de l'appel de la fonction.
Les informations de phase transmises au système lors des autorisations de déclenchement des traitements (voir dans la description ci-après) sont toujours relatives à cet instant de référence.

Cet instant temps de référence est recalculé en permanence grâce aux informations temporelles du premier traitement périodique dont le déclenchement a été confié au système et ce, pour chaque itération de ce traitement.
Il peut être changé dynamiquement dans le temps, en réitérant cet appel avec une nouvelle valeur en paramètre. Toute nouvelle demande de déclenchement est de la même façon, relative à ce nouvel instant de référence.

La fonction "Definir_reference_temps" retourne l'un des codes d'erreur suivants : "Ok", "Service_non_actif", et "Date_non_conforme" pour signifier que le temps absolu passé en argument n'est pas conforme aux contraintes du système.

La fonction "Declencher_traitement" permet d'autoriser le déclenchement d'un traitement, et de mémoriser de nouveaux paramètres d'activation du traitement. Cette fonction reçoit en entrée un identificateur de traitement, des valeurs de phase, période (pour un traitement périodique) et échéance, ainsi qu'un paramètre définissant un mode de fonctionnement. Les nouveaux paramètres d'activation sont alors utilisés en permanence par le système pour actualiser la gestion des demandes d'activation des traitements.
Tout traitement peut demander au système 1 de déclencher périodiquement ou apériodiquement un autre traitement, en utilisant la fonction "Declencher_traitement".

Lorsque l'information de phase est égale à une valeur particulière prédéfinie, par exemple -1, cela signifie que la demande d'activation du traitement est immédiate. Lorsque l'information de phase est nulle, cela signifie que l'activation du traitement doit être effectuée avec une phase nulle par rapport à l'instant de référence courant, c'est-à-dire à l'instant de référence qui se situe plus tard que l'instant courant.
Si l'information de période est nulle, cela signifie que l'activation du traitement est apériodique.

L'information d'échéance permet de définir le temps maximum alloué au traitement pour s'exécuter depuis sa demande d'activation par le système. Un événement majeur de dépassement d'échéance est signalé au traitement superviseur si le traitement n'atteint pas son terme dans le délai imparti. Une valeur particulière pour ce paramètre, par exemple nulle, signifie qu'il n'y a pas d'échéance à surveiller pour le traitement considéré.

Si l'information d'échéance est fournie dans l'appel de cette fonction, le système de gestion 1 surveille l'échéance d'exécution du traitement. L'instant correspondant à la date de fin d'échéance est recalculé à chaque demande d'activation du traitement concerné par le système 1 et constitue une date de réveil de celui-ci. Si le traitement n'a pas atteint à nouveau la fonction "Accepter_declenchement" avant la date d'échéance, le système 1 se réveille de lui-même à cet instant et engage le traitement suivant.

Dans le cas où le réveil du système 1, prévu pour cette échéance, intervient avant que le traitement concerné ait terminé la partie récurrente 24 de son exécution, le système transmet l'événement associé à ce dépassement d'échéance globale auprès d'un traitement superviseur qui s'est mis en attente de réception d'un événement grâce à l'appel de la fonction "Accepter_evenement" décrite plus loin dans la description. Si aucun traitement n'a effectué cet appel, alors aucun message n'est transféré par le système 1. Si un tel traitement existe et qu'il n'est pas en train de traiter un événement antérieur, ce nouvel événement est traité immédiatement par le traitement superviseur, sinon il est mémorisé dans une file d'attente d'événements. Ce mécanisme appliqué à une erreur de dépassement d'échéance n'a aucune portée sur le traitement responsable de son apparition.

Si le traitement atteint la fonction "Accepter_declenchement" avant la date d'échéance, le réveil du système associé à l'échéance est désactivé.

Le paramètre d'entrée "Mode" de cette fonction permet de transmettre au traitement concerné un message de changement de mode : activation du traitement périodique, fin normale, fin anormale, reconfiguration, ... Le mode doit être choisi parmi les symboles réservés à l'activation dans la table des événements 4.
Le changement de mode est effectué à la prochaine activation du traitement concerné.

On peut prévoir une valeur particulière par défaut pour tout paramètre qu'on ne désire pas modifier.

La fonction "Declencher_traitement" retourne l'un des codes d'erreur suivants : "Ok", "Service_non_actif", et "Id_traitement_non_conforme" pour indiquer que l'identificateur de traitement passé en paramètre d'entrée n'est pas connu par le système (ne figure pas dans la table des traitements 5).

Cette fonction peut également retourner l'un des codes d'erreur suivants : "Phase_non_conforme", "Periode_non_conforme", "Echeance_non_conforme" ou "Mode_non_conforme", lorsque le paramètre d'entrée correspondant n'est pas conforme aux contraintes du système. Dans le cas de la phase, cette non-conformité se produit par exemple si la date absolue correspondante dépasse les capacités de l'horloge de bord ou si cette même date absolue est supérieure à la date courante.

Le code d'erreur "Reference_inconnue" est retourné par cette fonction lorsqu'aucun temps de référence n'a été préalablement fourni par l'utilisateur.
Si le traitement concerné n'est pas opérationnel, c'est à dire que ce traitement est soit terminé soit non initialisé, alors l'appel de cette fonction retourne le code d'erreur "Traitement_non_opcrationnel".

Si le traitement concerné est en cours de terminaison, alors l'appel de cette fonction retourne le code d'erreur "Fin_traitement_en_cours".

Il est important de noter à ce sujet que pour un traitement périodique, une autorisation de déclenchement remplace les paramètres courants d'activation mis en place lors d'une autorisation antérieure. En outre, pour un traitement apériodique, il est possible de cumuler plusieurs autorisations de déclenchement, à condition que celles-ci soient immédiates Dans ce cas, les échéances fournies en paramètre d'appel sont cumulées selon les conventions décrites plus loin dans la description. Par contre, une autorisation de déclenchement différé remplace les paramètres d'activation courants mis en place lors d'une autorisation antérieure de déclenchement différé. Cette contrainte se justifie pour des raisons de simplicité de réalisation du système de gestion du temps 1.

La fonction "Declencher_traitement_date" permet d'autoriser le déclenchement d'un traitement à une date absolue, et de mémoriser de nouveaux paramètres d'activation du traitement. Cette fonction est analogue à la fonction "Declencher_traitement", à la différence qu'elle reçoit en entrée une date absolue au lieu d'une valeur de phase. Les codes d'erreurs retournés par ces deux fonctions sont les mêmes, sauf ceux concernant la phase qui sont remplacés dans la fonction "Declencher_traitement_date" par le code d'erreur "Date_non_conforme" dans le cas où la date absolue passée en paramètre n'est pas conforme aux contraintes du système.

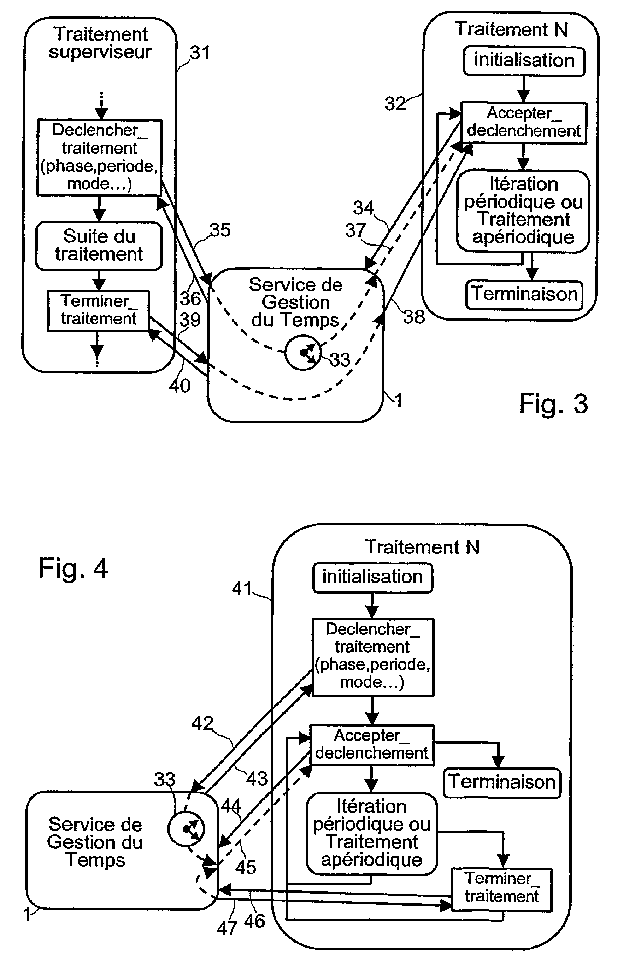

L'utilisation des fonctions "Declencher_traitement" ou "Declencher_traitement_date" et "Accepter_declenchement" est illustrée par les figures 3 et 4. La figure 3 illustre le cas d'une architecture d'application utilisateur 2 centralisée comportant un traitement superviseur 31 et au moins un traitement utilisateur N 32. Ces traitements ont préalablement été lancés et sont donc présents. Après une séquence d'initialisation, le traitement N fait appel 34 à la fonction "Accepter_declenchement" pour se mettre en attente d'activation par un autre traitement, en l'occurrence, le traitement superviseur 31.
Pendant ce temps, le traitement superviseur est exécuté et atteint l'appel de la fonction "Declencher_traitement" désignant le traitement N. L'appel 35 de cette fonction permet de demander au système 1 de mémoriser des paramètres d'activation (phase ou date d'activation, période, mode, ...) pour le traitement N, sous la forme d'un événement d'activation qui est inséré dans une file d'attente. L'appel de cette fonction retourne 36 un code de retour. Lorsque l'événement ainsi inséré est le prochain à traiter, le système 1 programme un compteur 33 avec la différence entre la date d'activation du traitement N et la date courante. Lorsque le compteur 33 arrive à échéance, le système 1 envoie 37 un code de retour en tant que paramètre de retour de la fonction "Accepter_declenchement", ce qui débloque le traitement 32, la séquence exécutée par celui-ci dépendant de ce code de retour. Si le code de retour est "Normal", le traitement 32 exécute la séquence pour laquelle il a été conçu, puis se remet en attente en appelant à nouveau la fonction "Accepter_declenchement".

La figure 4 illustre le cas d'une architecture d'application utilisateur 2 décentralisée. Dans ce cas, chaque traitement 41 lancé par l'application 2 s'initialise et appelle 42 la fonction "Declencher_traitement" pour indiquer au système 1 ses paramètres d'activation (phase ou date d'activation, période, mode, ...). Le système 1 insère un événement activation associé à ces paramètres dans une file d'attente et transmet 43 au traitement 41 un code de retour. Le traitement 41 appelle 44 ensuite la fonction "Accepter_declenchement" pour se mettre en attente d'activation par le système.
De la même façon que précédemment pour une application à architecture centralisée, lorsque le compteur 33 arrive à échéance, le système 1 envoie 45 un code de retour en tant que paramètre de retour de la fonction "Accepter_declenchement", ce qui débloque le traitement 41.

La fonction "Differer_traitement" permet de mettre en sommeil l'exécution du traitement qui appelle cette fonction, pendant une certaine durée passée en paramètre. Cette fonction demande au système de gestion du temps 1 de suspendre l'exécution du traitement effectuant la requête pendant la durée passée en paramètre. L'appel de cette fonction retourne l'un des codes d'erreur suivants renseignant sur l'aboutissement de l'opération : "Ok", "Service_non_actif" et "Delai_non_conforme" lorsque le paramètre d'entrée n'est pas conforme aux contraintes du système, en l'occurrence, qu'il dépasse les capacités des ressources temporelles (compteur 33, horloge 13).

La fonction "Differer_traitement_date" permet de mettre en sommeil l'exécution du traitement qui appelle cette fonction, jusqu'à une date absolue, passée en paramètre. Cette fonction est analogue à la fonction "Differer_traitement" mis à part qu'elle reçoit en entrée une date absolue à la place d'une durée.
Le traitement qui invoque la fonction "Differer_traitement" voit aussitôt son exécution suspendue. Le système 1 prend en compte les informations de réveil de ce traitement et met à jour une liste de réveils. L'exécutif temps réel active un autre traitement selon sa politique d'ordonnancement. Cette action conduit également à un enregistrement dans le relevé d'observation du traitement concerné.

Le système de gestion du temps se réveille de lui-même, lorsque l'instant de reprise d'un traitement est atteint, et met à jour ses informations de réveil. L'exécutif temps réel est ensuite sollicité par le système pour reprendre l'exécution du traitement concerné.

Les codes d'erreurs retournés par ces deux fonctions sont les mêmes, sauf celui concernant la durée qui est remplacé dans la fonction "Differer_traitement_ date" par le code d'erreur "Date_non_conforme".

Il est important de souligner que pour des raisons de simplicité de réalisation du système de gestion du temps 1, les fonctions "differer_traitement" ou "differer_traitement_date" sont incompatibles avec d'autres fonctions mettant en jeu des délais. Les conséquences pratiques sont les suivantes :
- si un traitement programme un déclenchement de traitement complémentaire (voir plus loin dans la présente description), l'appel consécutif à une fonction de mise en sommeil d'un traitement annule le déclenchement correspondant ;
- si un traitement programme une notification immédiate avec délai maximum jusqu'à la prochaine notification, l'appel consécutif à une fonction de mise en sommeil d'un traitement empêche la détection d'un dépassement éventuel de ce délai.

La fonction "Geler_traitement" permet à un traitement de geler, c'est-à-dire de bloquer l'exécution d'un autre traitement. L'appel de cette fonction signifie pour le système de gestion du temps 1 qu'il doit suspendre les demandes d'activation du traitement spécifié en paramètre, jusqu'à ce qu'une prochaine autorisation de déclenchement soit effectuée.

Un traitement peut demander le gel d'un autre traitement en appelant la fonction "Geler_traitement". Cet appel permet de signifier au système 1 d'inhiber tout déclenchement futur du traitement considéré. Le système 1 met à jour les informations de déclenchement le concernant et rend la main au traitement ayant effectué la requête.
Dés que le traitement considéré invoquera la fonction "Accepter_ declenchement" pour attendre sa prochaine activation, le système 1 réalise l'équivalent de la fonction "Signaler_evenement" (voir ci-après) pour avertir le traitement superviseur du gel effectif du traitement. Dans le cas où ce traitement était déjà en attente sur "Accepter_declenchement" au moment de la demande de gel, le système 1 effectue immédiatement cette action avant de rendre la main au traitement effectuant la requête.
Pour reprendre un processus de déclenchement après un gel, il suffit qu'un traitement appelle la fonction "Declencher_traitement".

Lorsque l'exécution du traitement concerné est effectivement gelée, c'est-à-dire lorsque le traitement a terminé son exécution et est revenu en état d'attente sur la fonction "Accepter_declenchement", un événement de type majeur prédéfini "Gel_traitement" est généré auprès du traitement superviseur.
Cet appel peut être utilisé pour les traitements apériodiques pour connaître la fin de l'exécution de la partie principale du traitement.
Un tel procédé permet au superviseur de se synchroniser sur la fin d'exécution d'un ensemble de traitements, que leurs activations soient liées ou indépendantes. Le superviseur peut ainsi effectuer un changement dynamique de mode de fonctionnement, synchronisé dans tous les traitements, en appelant la fonction "geler_traitement" pour arrêter les activations des traitements dont le mode de fonctionnement doit être changé, puis en appelant pour chacun de ces traitements, la fonction "declencher_traitement" associée aux paramètres temporels du nouveau mode de fonctionnement et au paramètre de mode indiquant aux traitements dans quel mode ils doivent fonctionner.
De cette manière, un changement dynamique de mode peut être effectué d'une façon simple et synchronisée sans faire intervenir de test d'une variable partagée spécifiant le mode de fonctionnement.

Il est à noter que le gel du traitement qui est utilisé dans le calcul de l'instant de référence pour les phases n'a aucune incidence sur ce dernier.

Cette fonction retourne un code d'erreur qui peut prendre l'une des valeurs suivantes : "Ok", "Service_non_actif", "Id_traitement_non_conforme", "Traitement_non_operationnel" ou "Fin_traitement_en_cours".

La fonction "Terminer_traitement" permet d'indiquer au système 1 qu'il doit terminer l'exécution d'un traitement dont l'identificateur est passé en paramètre. A cet effet, il envoie un message de terminaison au traitement concerné. Cette fonction reçoit également en tant que paramètre d'entrée un identifiant de mode qui doit être choisi parmi les identifiants d'événements réservés à la terminaison.

Un traitement peut demander au système de mettre un terme à l'exécution d'un autre traitement en appelant 39 la fonction "Terminer_traitement" (figure 3). Avant de rendre 40 la main au traitement auteur de la requête, le système 1 inhibe tout déclenchement futur du traitement concerné et envoie 38 le message d'arrêt fourni en paramètre à ce traitement, que ce dernier interprétera dés qu'il aura effectué à nouveau l'appel de la fonction "Accepter_evenement". Si jamais, ce traitement était déjà en attente dans la fonction "Accepter_delenchement" au moment de la demande de terminaison, il est immédiatement autorisé à effectuer sa partie finale 25 dés que l'exécutif temps réel l'aura activé selon la politique d'ordonnancement.
D'une manière analogue illustrée sur la figure 4, lorsqu'un traitement 41 d'une application à architecture décentralisée, arrive dans un état où il doit se terminer, il appelle 46 la fonction "Terminer_traitement" avec retour immédiat 47 d'un code de retour par le système. Au cours de cette fonction, le système 1 déclenche à nouveau le traitement 41. Lorsque le traitement 41 revient à l'appel de la fonction "Accepter_declenchement", il reçoit 45 comme code de retour un code de fin "Fin_normale" ou "Fin_anormale" et exécute donc sa séquence d'instructions de terminaison.

Cette fonction retourne un code d'erreur qui peut prendre l'une des valeurs suivantes : "Ok", "Service_non_actif", "Id_traitement_non_conforme", "Traitement_non_operationnel" ou "Fin_traitement_en_cours".

Les fonctions "Declencher_traitement_complementaire" et "Declencher_ traitement_complementaire_date" permettent de demander au système de gestion du temps 1 d'exécuter un sous-programme donné dont l'adresse est passée en paramètre, au terme d'un délai ou à une date absolue, également passé en paramètre. Ce sous-programme s'exécutant hors du flot d'instructions courant, il doit respecter plusieurs contraintes :
- il ne contient pas d'appels bloquants ;
- sa durée d'exécution est courte ; et
- il n'utilise pas de données locales connues au moment de l'appel de la fonction ; les données d'entrée ou de sortie sont globales et définies dans le module où il est déclaré ou dans des modules enveloppants.

Les informations passées en paramètres sont utilisées par le système de gestion 1 pour déterminer la date à ajouter à sa liste de réveils. La main est aussitôt rendue au traitement qui a appelé cette fonction.
Le système 1 se réveille de lui-même, lorsque l'instant de déclenchement du traitement complémentaire est atteint et met à jour ses informations de réveil.
Il exécute ensuite le sous-programme qui contient le traitement complémentaire.

Ce sous-programme est exécuté indépendamment du déroulement du traitement d'origine et il se déroule dans le contexte d'exécution du système. C'est la raison pour laquelle, il est nécessaire que ce traitement complémentaire soit le plus court possible et non-bloquant.
Le déclenchement d'un traitement complémentaire peut être décommandé par l'appel de la fonction "Notifier_evolution" décrite plus loin dans la description ; cette possibilité est exploitée pour associer le traitement complémentaire à un délai de garde. Dans ce cas, le traitement complémentaire ne doit s'effectuer que si le délai de garde est atteint, ce qui implique de le déprogrammer si l'opération que l'on cherche à surveiller à aboutit à temps.

Cette fonction retourne l'un des codes d'erreur suivants : "Ok", "Service_non_ actif", "Delai_non_conforme" ou "Date_non_conforme".

Le suivi temporel des traitements et la gestion des erreurs contribuent à la réalisation de trois fonctionnalités.
- l'observation du déroulement d'un traitement par accumulation d'enregistrements décrivant les différentes phases de son exécution et les dates correspondantes ;
- la détection d'événements temporels (dépassement d'échéance pour un traitement ou pour une partie d'un traitement) et transmission implicite ou explicite de ces événements à une instance superviseur si elle existe ; et
- la notification purement explicite d'événements applicatifs (définis par le programmeur) auprès d'une instance superviseur pour déclencher l'action correspondant à la nature de ces événements.

A cet effet, le suivi temporel des traitements et la gestion des erreurs comprennent les fonctions suivantes :
- "Designer_superviseur_notification",
- "Designer_superviseur_majeur",
- "Accepter_notification",
- "Accepter_evenement",
- "Notifier_evolution",
- "Notifier_evolution_date",
- "Signaler_evenement",
- "Signaler_evenement_date", et
- "Supprimer_evenement".

La fonction "Designer_superviseur_notification" ou "Designer_superviseur_majeur" permet au traitement qui l'appelle de se déclarer comme responsable de la gestion des événements de notification, respectivement des événements majeurs. L'appel de cette fonction peut être réalisé successivement par plusieurs traitements, sachant que tout événement de notification, respectivement majeur, survenant dans les traitements utilisateurs sera transmis au dernier s'étant déclaré responsable. Un même traitement peut se déclarer comme responsable de la gestion des deux types d'événements. Si aucun traitement ne s'est désigné pour assurer la gestion des événements de notification, respectivement des événements majeurs, les événements ne sont pas transmis par le système 1 qui se contente de les enregistrer à l'aide de l'enregistreur 14.
Ces fonctions retournent l'un des codes d'erreur "Ok" ou "Service_non_actif".

La fonction "Accepter_notification" permet au traitement superviseur de notification de se mettre en attente d'un événement de notification, conformément au schéma général de la structure d'un traitement représentée sur la figure 2.
Cette fonction reçoit en entrée un paramètre identifiant un mode, permettant de définir les caractéristiques de l'appel :
- mode bloquant : l'appel de cette fonction est bloquant jusqu'à ce qu'au moins un événement de notification soit présent dans la liste des événements survenus ; l'événement est alors supprimé de la liste des événements de notification et retourné par la fonction ;
- mode non-bloquant : l'appel de cette fonction est non bloquant, c'est-à-dire que si au moins un événement est survenu, celui-ci est supprimé de la liste des événements de notification et retourné par la fonction ; sinon un code d'erreur "Vide" est retourné par la fonction.
- mode parcours : l'appel de cette fonction est non bloquant, et si la liste des événements de notification est non vide, le premier de ces événements est retourné par la fonction et il est déplacé (et non supprimé) en queue de liste ; ainsi, en répétant successivement l'appel, l'utilisateur peut parcourir la liste des événements de façon non destructive, pour par exemple, rechercher un événement particulier dans la liste des événements de notification survenus.

Il est important de noter que dans ce dernier mode, l'appel de cette fonction entraîne plusieurs conséquences :
- L'utilisateur a la charge de contrôler les itérations des appels de la fonction ; en particulier, les événements n'étant pas supprimés de la liste au fur et à mesure qu'ils sont retournés par la fonction, l'utilisateur doit définir un nombre maximum d'itérations indépendant du retour de l'appel de la fonction.
- La chronologie d'apparition des événements est perdue.
- Les événements retournés par les appels successifs ne sont pas détruits au fur et à mesure. Il faut donc en particulier éviter de traiter plusieurs fois un événement qui ne serait apparu qu'une seule fois.

La fonction "Accepter_notification" reçoit également en tant que paramètre d'appel un "délai avant prochaine attente" qui permet de définir le délai maximum séparant la délivrance d'un événement par le système 1 et le prochain appel de cette fonction par le superviseur, obligatoirement présent pour récupérer l'événement. L'objectif est de permettre de détecter une anomalie au niveau du superviseur, dans la mesure où celui-ci mettrait un temps trop long à traiter un événement précédent. Une valeur nulle pour ce paramètre n'impose aucune vérification sur le délai séparant la prochaine attente d'événement. La valeur particulière de -1, définie par défaut pour ce paramètre permet de signifier que le délai reste inchangé par rapport à sa valeur courante.

Si ce délai est dépassé, le système exécute alors une séquence critique de réinitialisation, en appelant un sous-programme réservé "Traiter_erreur_fatale" dont le contenu est défini à l'extérieur du système.

L'appel de la fonction "Accepter_notification" retourne l'identificateur de l'événement et l'identificateur du traitement à l'origine de celui-ci, ainsi qu'un code d'erreur qui peut prendre l'une des valeurs suivantes : "Ok", "Delai_non_conforme" ou "Service_non_actif", ou bien "Vide" dans le cas où il n'y a pas d'événement en mode non-bloquant, "Impossible" lorsque le système 1 a déjà accordé à un autre traitement le droit d'être superviseur des événements de notification, ou encore "Mode_non_conforme" lorsque le paramètre d'entrée de mode n'est pas valide.

Il est important de relever que le "délai avant prochaine attente" équivaut pour le superviseur à une échéance de son traitement.

La fonction "Accepter_evenement" est analogue à la fonction "Accepter_notification", à la différence qu'elle s'applique non pas aux événements de notification, mais aux événements majeurs.

Aussi bien pour le traitement superviseur des événements majeurs, que pour le traitement superviseur des événements de notification, qui peuvent être un même et unique traitement, il est donc possible de signifier au système 1 une échéance pour le traitement des événements. Cette surveillance est activée en fournissant au système 1 la valeur de cette échéance lors de l'appel à la fonction "Accepter_evenement" ou "Accepter_notification". Dès que le système 1 est sollicité pour signaler un événement majeur ou de notification au traitement superviseur qui est assujetti à cette surveillance, le système met à jour sa liste de réveils en calculant la date correspondant à l'échéance de traitement de l'événement, et demande au système d'exploitation 11 d'activer le traitement superviseur, en fournissant l'événement à celui-ci. Si le traitement superviseur atteint à nouveau l'appel à la fonction "Accepter_evenement" ou "Accepter_notification" pour attendre l'événement suivant, avant que le système n'ait été réveillé pour l'échéance concernée, ce réveil est désactivé. A l'inverse, si le système se réveille de lui-même à la date de l'échéance et que le traitement n'a pas terminé l'action associée à l'événement, alors un traitement exceptionnel fourni par le système est exécuté pouvant conduire jusqu'à une réinitialisation du système.
Ce traitement exceptionnel est également appelé si le seuil des cumuls des événements à destination de l'un ou l'autre superviseur est franchi.

Les fonctions "Notifier_evolution" et "Notifier_evolution_date" permettent de planifier l'enregistrement d'une trace dans le suivi d'un traitement, voire de signaler le franchissement d'une étape, au superviseur de notification, dans la mesure où ce dernier existe et qu'il s'est déclaré compétent. Ces fonctions reçoivent en paramètre d'entrée un délai ou une date absolue définissant l'instant où sera généré par le système 1 l'événement de notification dont l'identificateur est également passé en paramètre de la fonction. Une valeur caractéristique, établie par défaut, pour le paramètre de délai ou de date absolue, indique que la signalisation de l'événement doit être immédiate.

L'appel de la fonction "Notifier_evolution" permet également de vérifier le respect d'une échéance intermédiaire dans le traitement. Cela est réalisé en précisant dans un autre paramètre, le délai maximum jusqu'à la prochaine notification, qui n'est applicable que lors d'une notification immédiate.
Une séquence d'instructions peut ainsi être surveillée par un appel à cette fonction au début et à la fin de cette séquence.
Cette fonction introduit une date dans la liste des réveils du système 1. Si le traitement concerné invoque la fonction "Notifier_evolution" avant le réveil du système associé à l'échéance, alors l'instant de ce réveil est désactivé.

Dans le cas où le réveil du système, prévu pour cette échéance, intervient avant que le traitement concerné ait terminé la séquence d'instructions surveillée, et donc exécuté à nouveau la fonction "Notifier_evolution", le système enregistre l'anomalie et génère un événement majeur prédéfini "Depassement_echeance_intermediaire" qui est transmis à l'instance responsable définie par l'utilisateur, c'est-à-dire un traitement dit superviseur qui s'est mis en attente de réception d'un événement grâce à l'appel "Accepter_evenement". Si aucun traitement n'a effectué cet appel pour cet événement, aucun message n'est transféré par le système. Si au contraire, un tel traitement existe et qu'il n'est pas en train de traiter un événement antérieur, ce nouvel événement est traité immédiatement par le traitement superviseur sinon il est mémorisé dans la file d'attente d'événements associée au traitement superviseur. Ce mécanisme appliqué à une erreur de dépassement d'échéance intermédiaire n'a aucune portée sur le traitement responsable de son apparition.

Une valeur nulle pour ce délai inhibe toute vérification d'échéance intermédiaire. La notification d'événement conduit dans un premier temps à l'enregistrement de celui-ci dans un relevé d'observation. La date de l'apparition de l'événement n'est pas transmise au traitement superviseur.

Il est important de souligner les modalités d'utilisation simultanée des notifications d'évolution : il est possible de cumuler plusieurs notifications à un traitement superviseur à condition qu'elles soient immédiates. Dans ce cas, les délais de garde paramétrés dans la fonction "Accepter_notification" sont cumulés selon des conventions décrites plus loin dans la présente description.
Si par contre, une notification différée est en gestation, toute nouvelle notification différée remplace la précédente.
Cette contrainte se justifie pour des raisons de simplicité de réalisation du système de gestion du temps.

En ce qui concerne le délai maximum jusqu'à la prochaine notification, les règles suivantes en découlent :
- Lorsqu'une notification immédiate contient un délai maximum, le passage du même traitement par une nouvelle notification immédiate avant l'écoulement de ce délai arrête son comptage ou le remplace par une nouvelle valeur, selon que la nouvelle notification comporte un délai maximum nul ou une valeur significative.
- Le principe précédent s'applique de la même façon lorsque l'on programme une notification immédiate à la suite d'un appel à une fonction pour déclencher un traitement complémentaire.
- Systématiquement, la programmation d'un déclenchement de traitement complémentaire à la suite d'une notification immédiate avec délai maximum ou d'une notification assortie d'un délai avant notification, a pour effet d'annuler le comptage lié à cette notification ; cette contrainte se justifie pour des raisons de simplicité de réalisation du système de gestion du temps.

Les fonctions "Notifier_evolution" et "Notifier_evolution_date" retournent l'un des codes d'erreur suivants : "Ok", "Service_non_actif", "Id_evenement_non_conforme", "Delai_non_conforme" ou "Date_non_conforme".

Les fonctions "Signaler_evenement" et "Signaler_evenement_date" permettent à un traitement de planifier, par l'intermédiaire du système de gestion du temps 1, l'apparition d'un événement exceptionnel. Un délai ou une date absolue, passé en argument permet de spécifier le temps au terme duquel l'événement sera signalé par le système 1. Une valeur caractéristique établie par défaut pour ce paramètre, indique que la signalisation de l'événement doit être immédiate. La nature des événements n'est pas forcément liée au temps et peut influer sur plusieurs traitements.
L'apparition d'un tel événement entraîne la constitution d'un relevé d'observation et une signalisation auprès du traitement superviseur assurant la gestion de l'événement.

La différenciation entre la gestion des événements majeurs et des événements de notification réside dans l'importance du délai de prise en compte de l'événement du premier type. En effet, les événements majeurs sont destinés à susciter une réactivité du système, tandis que les événements de notification sont destinés à être exploités en différé.
Pour obtenir une prise en compte rapide des événements par le superviseur, il suffit d'attribuer à ce traitement au niveau du système d'exploitation une priorité supérieure à celle du traitement qui demande la signalisation. Ainsi, dès que le système de gestion du temps 1 demande l'activation du superviseur, celui-ci s'exécute aux dépens du traitement demandeur.
Ces fonctions retournent un code d'erreur qui peut prendre l'une des valeurs suivantes : "Ok", "Service_non_actif", "Id_evenement_non_conforme", et "Delai_non_conforme" ou "Date_non_conforme".

Ici encore, si une signalisation différée d'événement majeur est programmée, toute nouvelle signalisation différée remplace la précédente.

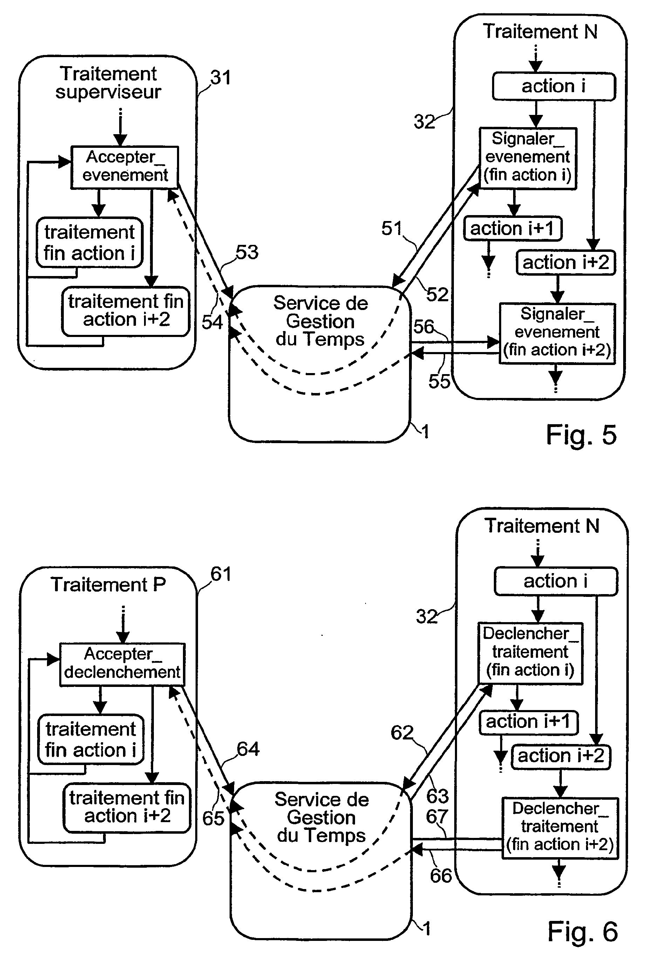

L'évolution d'un traitement peut donc être suivie à la demande de l'utilisateur, en des points d'exécution que lui-même définit, en appelant les fonctions "Notifier_evolution" ou "Signaler_evenement". Outre ce mécanisme d'observation, cette fonction permet de signaler au travers d'un événement, le franchissement de l'étape concernée auprès d'un traitement superviseur, si celui-ci s'est déclaré comme tel en effectuant une attente d'événement de notification grâce à l'appel "Accepter_notification" ou une attente d'événement majeur grâce à "Accepter_evenement". Ainsi, tel qu'illustré sur la figure 5, le traitement N 32 exécute une action i et dans certains cas doit signaler au superviseur 31 que cette action a été exécutée puis exécuter une action i+1. Pour signaler que l'action i a été exécutée, il appelle 51 la fonction "Signaler_evenement" en passant en paramètre un identificateur d'événement correspondant à 1a fin de l'action i, 1e système lui transmet 52 immédiatement un code de retour. Dans certains autres cas, il doit exécuter une autre action i+2 et signaler qu'il a terminé l'action i+2 en appelant 55 la fonction "Signaler_evenement", cet appel retournant 56 immédiatement un code de retour.

En parallèle, le traitement superviseur s'est mis en attente d'un événement en appelant 53 la fonction "Accepter_evenement". A la date demandée par le traitement 32 de signalement de l'événement, le système active 54 le traitement superviseur 31. Suivant l'événement signalé, "fin action i" ou "fin action i+2", le traitement superviseur 31 exécute l'action correspondante de fin de traitement de l'action i ou i+2 et appelle à nouveau la fonction "Accepter_evenement" pour se mettre en attente d'un nouvel événement.

Si lors de la signalisation, le traitement superviseur se trouve en attente d'événement alors, il est traité immédiatement par celui-ci. A l'inverse, si ce traitement est en train de traiter un événement antérieur, ce nouvel événement est mémorisé dans la file d'attente d'événements associée au traitement superviseur.

Il est à noter que dans le cas d'une application utilisateur à architecture décentralisée, ce mécanisme n'est pas applicable dans la mesure où il n'y a pas de traitement superviseur. Pour synchroniser deux traitements 32 et 61, on utilise donc de préférence les fonctions Declencher_traitement" et "Accepter_declenchement", comme représenté sur la figure 6, et en association un identificateur de traitement aux actions i et i+2. Sur cette figure, à la fin de l'action i, dans certains cas, on appelle 62 la fonction "Declencher_traitement" avec un paramètre de mode indiquant la fin de l'action i et retour 63 immédiat du système 1, pour signaler au traitement 61 la fin de l'action i, avant de passer à l'action i+1. Dans d'autres cas, le traitement 32 exécute l'action i+2 et appelle 66 la fonction "Declencher_traitement" avec un paramètre de mode indiquant la fin de l'action i+2 et retour 67 immédiat du système 1, pour signaler au traitement 61 la fin de l'action i+2. Le traitement 61 qui est en attente de déclenchement à la suite de l'appel 64 de la fonction "Accepter_declenchement" est activé par le système 1 qui lui retourne 65 un code de retour, et suivant le traitement à déclencher, exécute le traitement correspondant à la fin de l'action i ou la fin de l'action i+2.

La fonction "Supprimer_evenement" permet d'effacer la dernière demande différée émise par un traitement quelconque pour notifier une évolution ou signaler un événement majeur. Le choix entre une demande de signalisation ou une demande de notification se fait au moyen d'un paramètre d'appel de classe d'événement.

Cette fonction retourne l'un des codes d'erreurs suivants : "Ok", "Service_non_ actif", ou "Id_evencment_non_conforme".

Ici encore, si une signalisation différée d'événement majeur est programmée, toute nouvelle signalisation différée remplace la précédente.

En définitive, le système de gestion du temps 1 propose, grâce à son interface 6, des fonctions permettant de contrôler l'exécution de traitements périodiques ou apériodiques et des outils de surveillance temporelle et de gestion d'événements. Cependant, ces fonctions doivent être utilisées en respectant certaines contraintes qui sont introduites par l'architecture du système et le taux d'occupation des ressources, de ce dernier.

L'architecture du système entraîne tout d'abord des contraintes sur la structure de programmation d'un traitement comme cela est représenté sur la figure 2.

L'exécution d'une fonction de l'interface 6 ne doit pas monopoliser inutilement les ressources de l'unité de traitement. En particulier, plus le système de gestion du temps offre de moyens de contrôle temporel, plus il va consommer les ressources de l'unité de traitement pour vérifier les échéances ou mettre à jour l'état des traitements.

On n'effectue donc pas d'empilement des commandes d'activation différée ou de surveillance, chaque appel venant écraser les informations précédentes et/ou partagées avec une autre fonctionnalité mise enjeu.
Cela se traduit également au niveau utilisateur par une impossibilité de recourir simultanément, dans un même traitement, à deux fonctionnalités différentes, mais faisant référence aux mêmes entités internes au système. Ainsi, il est exclu d'utiliser simultanément au sein d'un même traitement les appels aux fonctions de mise en sommeil, de déclenchement de traitement complémentaire, de notification temporisée (échéance de franchissement d'étapes) et de surveillance de l'arrivée d'événements. Chacun de ces appels exploitant une même entité et venant remplacer les informations précédentes.

La description qui précède présente les outils permettant la mise en oeuvre de la surveillance des traitements. L'observation, a posteriori, de l'évolution des traitements s'effectue en partie par l'accumulation d'enregistrements, à l'initiative du système de gestion du temps 1. A cet effet, le module Enregistreur 14 dispose d'une interface 15 assurant l'écriture et la lecture d'enregistrements et donc le dépouillement des informations de suivi des traitements.
Ses spécifications sont figées et ne dépendent pas du contexte d'implémentation.

Le dimensionnement du système de gestion du temps 1 implique un dimensionnement du module enregistreur 14. Les principales caractéristiques de ce module sont le nombre de traitements observés, ainsi que la taille allouée à l'observation de chaque traitement, taille qui est directement proportionnelle aux nombres d'événements traités.

Les relevés d'observations se comportent comme des mémoires tampon "circulaires". Une fois que ces mémoires sont saturées, les enregistrements suivants viennent écraser les premiers enregistrements insérés dans le relevé.

L'interface enregistreur 15 regroupe les fonctions suivantes :
- "Initialiser_observation",
- "Activer_enreg",
- "Desactiver_enreg",
- "Definir_fenetre",
- "Ecrire_releve",
- "Extraire_dernier_releve", et
- "Obtenir_nombre_enregistrements".

La fonction "Initialiser_observation" permet de créer un relevé associé à un traitement en spécifiant en paramètres l'identifiant du traitement concerné et la taille allouée au relevé d'observations correspondant.
Chaque enregistrement est donc spécifique de chaque traitement. Cette solution permet de favoriser, en terme de quantités stockées, les observations relatives à un traitement déterminé par action sur le service enregistreur, plutôt que par des interventions de filtrage au niveau des traitements applicatifs. Un autre avantage de ce procédé est d'éviter l'enregistrement de l'identification du traitement.

Cette fonction retourne l'un des codes d'erreur suivants : "Ok", "Id_traitement_non_conforme", et "Taille_non_conforme" lorsque la taille passée en paramètre d'entrée n'est pas conforme aux contraintes du système.

Les fonctions "Activer_enreg" et "Desactiver_enreg" permettent respectivement d'activer et de désactiver l'enregistrement de relevés pour tous les traitements en cours d'observation, désignés par l'appel de la fonction "Initialiser_observation".

La fonction "Definir_fenetre" permet de fixer les paramètres temporels de l'observation des traitements. Elle prend comme argument les dates de début et de fin entre lesquelles l'observation sera effective. Cette fenêtre n'est considérée que si on n'utilise aucune des fonctions d'activation / désactivation.

Cette fonction retourne l'un des codes d'erreur suivants : "Ok" et "Date_non_conforme".

La fonction "Ecrire_releve" permet d'ajouter dans le relevé d'observations d'un traitement, un enregistrement concernant l'apparition d'un événement à une date donnée. Elle prend comme paramètres d'entrée, l'identificateur du traitement concerné, l'identificateur de l'événement survenu et la date de son apparition.

Cette fonction retourne l'un des codes d'erreur suivants : "Ok", "Id_traitement_non_conforme", "Id_evenement_non_conforme", "Date_non_conforme" ou "Enregistreur_non_actif" lorsque le module d'observation n'est pas initialisé.

La fonction "Extraire_dernier_releve" permet d'obtenir le dernier enregistrement dans le relevé d'observation d'un traitement. Elle prend comme paramètre d'entrée, l'identificateur du traitement concerné et elle retourne l'identificateur de l'événement survenu et la date de son apparition, ainsi que l'un des codes d'erreur suivants : "Ok", "Id_traitement_non_conforme", "Enregistreur_non_actif" et "Fin_releve" lorsque la fin du relevé d'observation a été atteinte.

La fonction "Obtenir_nombre_enregistrements" permet d'obtenir le nombre d'écritures effectuées dans les relevés d'observations depuis son initialisation.
Cette fonction retourne le code d'erreur "Ok" ou "Enregistreur_non_actif".

Le système 1 permet finalement deux types d'observations, l'un de niveau applicatif est fourni explicitement par les fonctions de notification, l'autre de niveau macroscopique est gérée par le système 1 et fait appel à l'enregistreur 14. L'observation macroscopique est destinée à tracer finement les effets du systeme 1 sur l'évolution temps réel des traitements. Ainsi, chaque passage d'un traitement de l'état inactif 23 à l'état actif 24 ou de terminaison 25 donne lieu à un enregistrement daté approprié dans son relevé . Un des champs de l'enregistrement contient soit un code indiquant l'inactivation soit l'événement retourné au superviseur d'événements, au superviseur de notification ou à tout autre traitement par respectivement les fonctions "Accepter_evenement", "Accepter_notification" ou "Accepter_declenchement".
Les transitions entre états du traitement effectué par le système 1, les dépassements de délais de garde ainsi que les demandes d'activation formulées au système d'exploitation font également l'objet d'enregistrements dans un relevé spécifique. Chaque enregistrement contient donc un événement qui a été mis dans la file d'attente d'un traitement destinataire.
Enfin, les demandes de déclenchement, de signalisation ou de notification d'événement opérées par l'intermédiaire des fonctions "Declencher_traitement", "Declencher_traitement_complementaire", "Notifier_evolution" ou "Signaler_evenement"
donnent lieu à un enregistrement dans le relevé du traitement demandeur. L'enregistrement contient soit l'événement fourni à l'appel de la fonction, soit à défaut un code caractérisant la fonction.
L'exploitation des relevés d'observation permet, grâce notamment aux dates, d'évaluer le comportement temps réel passé de tous les traitements sans avoir à instrumenter le système d'exploitation.

L'interface 6 qui vient d'être décrite comprend un nombre réduit de fonctions. Elle est donc simple à mettre en oeuvre, tout en offrant les fonctionnalités de gestion du temps, nécessaires à une application temps réel, et ce quelle que soit l'architecture de celle-ci. En particulier, elle comprend une seule fonction ("Declencher_traitement") pour le déclenchement et la signalisation d'un traitement. Il en résulte que la structure d'un traitement est simple et donc le déroulement de son exécution est plus facilement contrôlable dans la mesure où il ne présente qu'un seul point de synchronisation.

En outre, le système 1 gère efficacement les changements dynamiques de mode en ce qui concerne les caractéristiques temporelles des traitements. En effet, le système est capable de modifier dynamiquement les paramètres de déclenchement (phase, période) des traitements. En cas de changement de mode, il permet en outre d'avoir des états transitoires dans lesquels des traitements fonctionnent encore dans l'ancien mode, et simultanément d'autres dans le nouveau mode. En effet, l'interface 6 comprend la fonction "Geler_traitement" qui permet de suspendre le déclenchement de tous les traitements concernés avant de les redémarrer ensemble dans le nouveau mode.

Le système de gestion du temps 1 nécessite en outre l'utilisation de mécanismes dépendant du système d'exploitation 11 du calculateur 10. D'une manière générale, chaque système temps réel met à disposition des mécanismes et des outils assurant les fonctionnalités demandées, mais dont l'utilisation leur est en général singulière et non standardisée. C'est pourquoi le système de gestion 1 comprend une interface 7 avec le système d'exploitation dans laquelle on a introduit une notion d'uniformisation des appels, en proposant aux autres services, des appels système dont les interfaces sont figées mais dont l'implémentation dépend du calculateur cible 10.
L'interface 7 regroupe des mécanismes de synchronisation, d'accès et de protection des ressources partagées, des mécanismes de définition de groupes d'instructions solidarisées, et d'identification de traitements.

Les mécanismes de synchronisation permettent de synchroniser des traitements par messages, et dans le même temps, d'offrir un moyen de communication inter traitements par file d'attente de messages. La transmission des événements entre les traitements ou l'activation de traitements utilisent ces mécanismes.
Les mécanismes de synchronisation comprennent les fonctions suivantes :
- "Init_synchro_mess",
- "Recevoir_synchro_mess", et
- "Envoyer_synchro_mess".

La fonction "Init_synchro_mess" permet de définir le nombre maximum de messages qui peuvent être accumulés, associés à un objet de synchronisation (boite aux lettres) désigné par un identificateur. Cette fonction reçoit en paramètres d'entrée, un identificateur de boite aux lettres et la capacité maximale à allouer à cette boite aux lettres. Elle retourne l'un des codes d'erreur suivants : "Ok", "Id_bal_non_conforme" lorsque l'identificateur de boite aux lettres n'est pas reconnu par le système, ou "Taille_bal_non_conforme" lorsque la capacité de la boite aux lettres dépasse les contraintes du système.

La fonction "Recevoir_synchro_mess" permet de bloquer le déroulement d'un traitement jusqu'à la réception d'un message de synchronisation. Un identificateur passé en paramètre de cette fonction désigne l'objet de synchronisation (boite aux lettres) utilisé. L'appel de cette fonction retourne l'identificateur du message reçu.

Un délai de garde est également passé en paramètre d'entrée pour spécifier la durée maximum de l'attente d'un message. Au terme de ce délai, la fonction retourne le code erreur "Delai_depasse". Sinon, elle retourne l'un des codes d'erreur suivants : "Ok", "Id_bal_non_conforme" et "Delai_non_conforme".

Il est à noter que l'existence d'un mécanisme de garde dépend de l'implémentation du noyau temps réel, sans aucun lien avec le système de gestion du temps 1.

La fonction "Envoyer_synchro_mess" permet d'envoyer un message de synchronisation de manière à débloquer un autre traitement en attente sur ce message. Un identificateur de boite aux lettres, passé en paramètre, désigne l'objet de synchronisation utilisé. Un autre paramètre d'entrée fournit l'identificateur du message à envoyer.
Cette fonction retourne l'un des codes d'erreur suivants : "Ok", "Id_bal_non_conforme", "Id_evenement_non_conforme" et "Depassement_capacite" lorsque le message est perdu du fait que la boite aux lettres est pleine.

Les mécanismes de protection des ressources partagées permettent de protéger des ressources partagées entre plusieurs traitements, en n'en autorisant l'accès qu'à un seul des traitements. Ces mécanismes permettent de définir une section critique dont l'exécution ne doit pas être interrompue par un autre traitement. Par contre, toutes les interruptions matérielles sont acceptées. Une section critique ne doit contenir aucune opération mettant en jeu une attente entraînant une transition vers un autre traitement.

Ces mécanismes regroupent les fonctions "Debut_section_critique" et "Fin_section_critique".

L'appel de la fonction "Debut_section_critique" a pour but d'empêcher plusieurs traitements d'accéder (en lecture ou écriture) simultanément à des ressources. Cet appel empêche les traitements autres que celui à l'initiative de la requête d'intervenir tant que ce dernier ne leur accorde pas explicitement l'autorisation de poursuivre leur exécution. Cette autorisation est donnée par l'appel de la fonction "fin_section_critique" qui signifie la fin d'utilisation de ressources partagées.

Les mécanismes de définition de groupes d'instructions solidarisées permettent d'assurer l'exécution d'un bloc d'instructions de manière atomique", c'est-à-dire non interruptible. En d'autres termes, ils garantissent que l'exécution des instructions contenues dans ce bloc ne peut être interrompue par d'autres traitements ou par le système.

Il est à noter que l'atomicité n'est pas totale, dans la mesure où le bloc peut contenir une opération mettant en jeu une attente. Il en résulte une transition vers un autre traitement qui a ses propres critères d'interruptibilité.

La définition d'un bloc d'instructions non interruptible est effectué par l'appel de la fonction "Debut_sequence_atomique" au début du bloc et de la fonction "Fin_sequence_atomique" à la fin du bloc. La fonction "Debut_sequence_atomique" retourne le masque des interruptions au moment de son appel, tandis que la fonction "Fin_sequence_atomique" reçoit en paramètre d'entrée le masque des interruptions à rétablir lors de l'appel.

L'interface avec le système d'exploitation comporte également une fonction d'identification de traitements "Nom_traitement" qui retourne l'identificateur du traitement ayant appelé la fonction.

L'interface 8 avec le matériel comporte deux fonctions, à savoir "Fixer_prochaine_actualisation" et "Actualiser".
La fonction "Fixer_prochaine_actualisation" permet de déclencher le compteur de délais 33 interne au système 1, pour compter le délai entre l'instant courant et l'instant où doit être exécuté la prochaine mise à jour des états des traitements. Une fois ce délai écoulé, le compteur a la charge de lancer l'exécution de la procédure d'actualisation des états des traitements en appelant la fonction "Actualiser". Ce délai est calculé à partir des informations temporelles des traitements pour permettre le contrôle des échéances ou les demandes d'activations des traitements périodiques.
Cette fonction reçoit en paramètre ce délai qui est exprimé dans l'unité de temps interne, fixée par le système. Elle retourne le code d'erreur "Ok" ou "Delai_non_conforme" lorsque la valeur passée en paramètre est en dehors de la résolution temporelle offerte par le support matériel.

La fonction "Actualiser" permet de mettre à jour les états des traitements actuellement gérés par le système. Elle fait partie du système 1, mais est appelée par le matériel 12 par le biais d'une interruption matérielle associée au compteur de délais 33.

L'interface 8 est aussi utilisée pour armer un délai de garde matériel lorsque le calculateur est doté de dispositifs de chien de garde. Chaque fois que le système 1 invoque la fonction "Fixer_prochaine_actualisation" pour programmer le compteur 33, il programme en parallèle le délai de garde matériel d'une valeur équivalente. Puisqu'à la fin du traitement d'un événement, le système 1 enchaîne très probablement une actualisation du prochain événement, le délai de garde matériel est rechargé avant d'atteindre la fin du comptage. Par contre, en cas de dysfonctionnement du système 1, ce délai de garde s'écoule entièrement, et par le biais d'une interruption matérielle, déclenche un sous-programme réservé "Traiter_erreur_fatale". Le système 1 évite ainsi aux traitements de gérer un chien de garde commun.
De cette manière, par rapport aux systèmes temps réel de l'art antérieur, les traitements applicatifs n'ont plus besoin de gérer le ou les chiens de garde du calculateur.

L'interface 9 avec l'horloge 13 permet de disposer d'informations temporelles dont les sources varient d'une implémentation à une autre. Cette interface regroupe des mécanismes assurant la gestion d'une horloge en temps absolu 13 et ses spécifications sont figées quel que soit le contexte d'implémentation.
L'horloge en temps absolu 13 peut être initialisée et consultée. L'unité de temps fournie à l'application 2 par cette interface est appelée "unité de temps bord". Les temps retournés par cette interface et ceux manipulés par les couches inférieures du système peuvent posséder des résolutions et des précisions différentes. C'est pourquoi, cette interface fournit des points d'entrée exprimant le temps bord soit en unité bord pour l'utilisateur, soit en une unité proche de celle employée en interne au système, que l'on prévoit également proche de la microseconde (µs). Cette interface nécessite donc de fournir au système les rapports de conversion entre les unités "utilisateur" et "système", et la microseconde.

Les temps sont exprimés à l'intérieur d'un intervalle qui dépend de l'implémentation. Aussi, il est possible d'autoriser des valeurs négatives pour des raisons de performance du gestionnaire d'horloge.

Cette interface comprend les fonctions suivantes :
- "Obtenir_unité_utilisateur" qui permet d'obtenir l'unité de temps bord de l'horloge exprimée en microsecondes,
- "Obtenir_unité_service" qui permet d'obtenir l'unité exprimée en microsecondes, du temps fourni au système de gestion du temps 1 par l'horloge 13,
- "Obtenir_temps_max" qui permet d'obtenir la valeur maximale en unité du système, du temps absolu, permise par la représentation associée aux temps fournis au système par l'horloge,
- "Initialiser" qui permet d'initialiser l'horloge 13 à une valeur initiale de référence choisie lors de l'implémentation,
- "Lire_temps_utilisateur" qui permet d'obtenir la date courante exprimée dans l'unité utilisateur par rapport au temps absolu de référence défini par l'appel de la fonction "Initialiser",
- "Lire_temps_service" qui permet d'obtenir la date courante exprimée dans l'unité des temps fournis au système, en prenant comme référence le moment où l'on a initialisé l'horloge par l'appel de la fonction "Initialiser".

Plus précisément, la valeur maximale du temps absolu, fournie par la fonction "Obtenir_temps_max" correspond à l'écart maximal qui peut exister entre une date absolue et la date courante.

Le système de gestion du temps 1 nécessite l'acquisition d'un temps absolu local fourni par l'horloge 13 et dont la valeur initiale est définie arbitrairement, le démarrage à partir de cette valeur étant commandé par la fonction "Initialiser". Comme cette horloge est utilisée lors de l'algorithme d'actualisation des états des traitements ou lors de l'enregistrement d'événements dans le relevé d'observations, toute désignation de temps absolu lors de l'utilisation du système de gestion du temps 1 est effectuée dans la référence de cette horloge.

La phase utilisée en tant que paramètre dans l'appel de la fonction "Declencher_traitement" permet d'étaler dans le temps les instants des demandes d'activation des traitements périodiques ou apériodiques. Elle est toujours relative à un instant dit de référence.
Ce temps de référence est initialement défini par l'appel de la fonction "Definir_reference_temps".
La phase du premier traitement périodique dont la demande de déclenchement est effectuée auprès du système 1, est relative à ce temps de référence. Par la suite, la phase des nouveaux traitements périodiques ou apériodiques sera exprimée par rapport à un temps de référence recalculé périodiquement en fonction de la phase de ce premier traitement et par rapport à sa prochaine demande d'activation.
D'autre part, si cette référence est régulièrement réactualisée, elle garde une signification permanente pour définir la phase de nouveaux traitements sur une longue échelle de temps. A contrario, si la référence des phases était statique, l'affectation d'une phase lors d'une nouvelle activation impliquerait des calculs plus importants, consommateurs de ressources.
L'utilisateur peut redéfinir un nouveau temps absolu de référence à tout moment à l'aide du même appel de la fonction "Definir_reference_temps". Les traitements déjà contrôlés par le système ne subissent aucune modification. Le processus d'actualisation du temps de référence est le même qu'initialement. Le traitement dont les informations sont utilisées pour l'actualisation du temps de référence est le premier dont la demande de déclenchement suit cette modification du temps de référence par l'utilisateur.

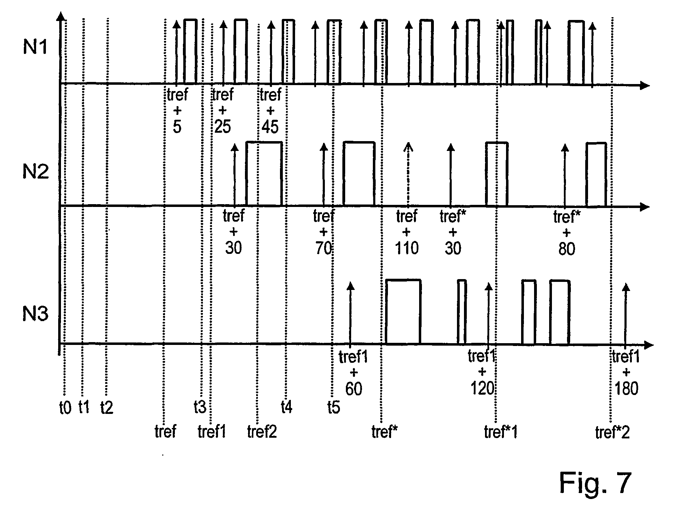

La figure 7 illustre le fonctionnement et l'utilisation de temps de référence. Cette figure représente sous la forme de chronogrammes, les périodes durant lesquelles trois traitements N1, N2, N3 sont exécutés par l'unité de traitement.
A l'instant t0, le temps de référence tref est défini, par exemple par un traitement non représenté sur cette figure, qui appelle la fonction "Definir_reference_temps". A l'instant t1, le traitement périodique N1 est planifié avec une phase de 5 ms et une période de 20 ms. Ce traitement est donc le premier à être pris en charge par le système de gestion du temps après la définition du temps de référence tref. Le traitement N1 est donc activé pour la première fois à l'instant tref+5, et exécuté quelques instants plus tard en fonction de l'occupation de l'unité de traitement.
A l'instant t2, le traitement périodique N2 est planifié avec une phase de 30 ms et une période de 40 ms. Le temps de référence utilisé pour le lancement du traitement N2 est le temps tref.
Juste avant l'activation du traitement N1 à l'instant tref+5, le système de gestion 1 redéfinit le temps de référence tref en tref1 qui correspond au temps tref auquel on a ajouté la période du traitement N1 ou bien à la date de 1a prochaine activation du traitement N1 auquel on a retranché 1a phase du traitement N1.

Quelques millisecondes après 1a fin de 1a première exécution du traitement N1, à l'instant t3, le traitement N3 est planifié avec une phase et une période de 60 ms. Le système 1 calcule donc l'instant de déclenchement du traitement N3 à partir de la nouvelle référence de temps tref1, soit à l'instant tref1+60. En parallèle, le système déclenche périodiquement les traitements N1 et N2 en se basant sur leurs périodes respectives. En outre, juste avant l'activation suivante du traitement N1, le temps de référence est redéfini pour devenir tref2 qui est fixé à une période du traitement N1 plus tard. Le temps de référence est ainsi redéfini à chaque période du traitement N1.

De cette manière, on utilise une datation simplifiée qui évite de manipuler des temps absolus d'une grande dynamique, c'est-à-dire exprimés sous la forme de mots binaires de grande taille. Ceci a pour conséquence que le temps fourni par l'horloge revient à zéro périodiquement. Il en résulte également que pour éviter le risque de dates équivoques, le système 1 doit imposer que les temps passés en paramètre des fonctions de l'interface 6 soient espacés du temps courant de moins de la moitié de la dynamique du temps de l'horloge 13.

Ensuite, si à l'instant t4, le temps de référence est modifié par un traitement pour devenir tref*, par exemple par le traitement N1 par l'appel à la fonction "Definir_reference_temps", tref* devient la nouvelle référence pour tous les traitements qui vont être planifiés après l'instant t4. Ainsi, si à l'instant t5, le traitement N2 est à nouveau planifié avec une phase de 30 ms et une période de 50 ms, cette planification du traitement N2 aboutit à la définition d'un nouveau temps de référence tref*1 qui est égal à la date de la prochaine activation planifiée de N2 à laquelle on a retranché la phase. Comme précédemment, à chaque nouvelle activation périodique de N2, le temps de référence est redéfini pour devenir tref*2, etc.

Il est à noter que le gel du traitement utilisé dans l'actualisation du temps de référence, n'a aucune conséquence future sur ce calcul. Les informations permettant de calculer à tout moment le temps de référence sont continuellement mises à jour, même si ce traitement n'est plus activé.

La surveillance d'une échéance consiste à surveiller la durée d'un traitement depuis sa demande d'activation par le système 1 jusqu'à la fin de son exécution.
A chaque demande d'activation d'un traitement, le mécanisme de surveillance est remis à jour si la surveillance de l'échéance est effective pour le traitement concerné.
En particulier, si le système effectue des demandes d'activation pour un traitement surveillé alors que l'exécution correspondant à sa dernière activation n'est pas terminée, les informations du mécanisme de vérification des échéances sont recalculées pour chaque demande d'activation, et le contrôle de l'échéance pour l'itération courante n'est plus effectué.

Ainsi, la surveillance de l'échéance de la première demande d'activation d'un traitement est interrompue lorsqu'une seconde demande d'activation du traitement a lieu. Le système 1 suppose alors que le traitement respecte les contraintes d'échéance, si la fin de la dernière exécution est atteinte avant la somme des échéances correspondantes. Néanmoins, aucune vérification n'est effectuée pour vérifier le respect des échéances intermédiaires.
Ce principe est inhérent au fait qu'il y a une multiplication des demandes d'activation par le système 1 sans qu'aucun contrôle ne soit porté sur la fin d'exécution correspondant aux demandes d'activation précédentes.

Une solution offerte à l'utilisateur pour sécuriser le contrôle des échéances intermédiaires, consiste à demander le gel du traitement avant toute demande d'activation de celui-ci. Ainsi, la réception de l'événement de réalisation du gel reçu par le traitement superviseur, lui indique que le traitement a effectivement terminé son exécution précédente et qu'il peut alors effectuer soit un changement de configuration du traitement soit une demande de déclenchement immédiat pour ce traitement. Chaque exécution est alors soumise au contrôle de l'échéance précisée par l'utilisateur.
Ce principe d'accumulation des échéances d'exécution des traitements est appliqué de la même façon à la vérification des échéances de gestion des événements (notifications ou événements majeurs) par les traitements superviseurs.

D'une manière générale, pour gérer tous les délais, le système 1 mémorise dans au moins une file d'attente tous les événements qu'il doit traiter, chaque événement étant associé à une date absolue d'exécution. De préférence, le système gère une file d'attente par traitement initialisé. A chaque arrivée d'un nouvel événement différé ou répété, il compare sa date absolue avec celle du prochain événement à traiter. Si la date du nouvel événement n'est pas la plus proche du temps courant, il insère l'événement dans la file d'attente en association avec la date de son traitement. Dans le cas contraire, le délai séparant le temps courant avec la date d'exécution du nouvel événement est chargé dans le compteur 33 et le système 1 se met en sommeil. En fin de comptage, le compteur génère une interruption qui déclenche le système 1 lequel traite tous les événements à traiter à la date en cours.

Si l'événement à traiter correspond au déclenchement d'un traitement complémentaire, le système appelle le traitement complémentaire correspondant. Dans le cas contraire, si l'événement correspond à une activation et qu'il s'agit d'une activation périodique, le système 1 insère dans la file d'attente un événement de type activation périodique à la date de la prochaine activation et retire de la file d'attente l'éventuel événement de dépassement d'échéance associé. Si de plus, il s'agit d'une activation périodique avec contrôle d'échéance, il insère dans la file d'attente un événement de dépassement d'échéance à la date de l'échéance à programmer. S'il s'agit d'un événement de type notification, le système suspend l'événement de dépassement d'échéance intermédiaire. Si l'événement est la programmation du délai de garde superviseur ou un événement majeur, il programme dans la file d'attente du superviseur un événement de dépassement de délai de garde à la date correspondante.

Ensuite, le système poursuit le traitement de l'événement en le signalant au traitement destinataire. Ce signalement consiste à déposer un message dans l'une des deux boîtes aux lettres affectées à chaque traitement. En effet une boîte aux lettres sert au déclenchement du traitement, tandis que l'autre est réservée à la fonction "Differer_traitement". De la sorte, on permet que le déclenchement et le contrôle d'échéance se poursuivent indépendamment d'une suspension du traitement. Puis il recherche le prochain événement à traiter, charge le compteur 33 avec le délai correspondant à la date associée à l'événement, et se met en sommeil.

Si le délai à programmer dans le compteur 33 est supérieur à la valeur maximale du compteur, le système 1 charge le compteur à sa valeur maximale et le prochain événement attendu est considéré comme fictif.

Si la nouvelle commande est à exécution immédiate, le système 1 exécute la commande immédiatement.

Le système de gestion du temps 1 est réalisé de manière à respecter dans des limites fixées par chaque utilisation, des aspects liés au taux d'occupation de l'unité de traitement et à la précision des temps mis en jeu (période, échéance, ...). En particulier, le temps mis à profit pour l'actualisation des états des traitements doit être le plus court possible.

La fonctionnalité d'observation permettant le suivi en temps différé du déroulement des traitements est activée ou désactivée dynamiquement par programmation si sa présence est autorisée par directive de compilation lors de l'élaboration du système.

Par ailleurs, dans le même souci de performance, certaines vérifications telles que la cohérence des informations transmises en paramètre des appels au système 1 peuvent être activées ou désactivées par des directives de compilation.

## Revendications

1. Procédé de gestion du temps dans un système temps réel dans lequel des traitements applicatifs sont exécutés et communiquent entre eux à l'aide de commandes transmises à un système de gestion du temps, les commandes transmises par les traitements applicatifs au système de gestion du temps comprenant des commandes d'activation d'un traitement applicatif à une date d'activation déterminée, le système de gestion du temps effectuant pour chaque commande d'activation reçue des étapes de :
- prise en compte de la commande d'activation d'un traitement applicatif,
- associer à la commande un événement d'activation auquel est attribué au moins une date d'échéance de l'événement correspondant à la date d'activation du traitement applicatif, et insérer l'événement en association avec sa date d'échéance dans une liste d'événements à traiter,
- déterminer dans la liste d'événements le prochain événement à traiter en fonction des dates d'échéance respectives des événements de la liste, et activer un compteur (33) pour qu'il se déclenche à la date d'échéance du prochain événement à traiter, et
- au déclenchement du compteur, activer le traitement applicatif associé au prochain événement à traiter,
**caractérisé en ce que** chaque traitement applicatif comprend au moins un appel à une commande de mise en attente d'activation qui place le traitement dans un état d'attente d'activation par le système de gestion du temps, le traitement applicatif une fois activé dans un mode de fonctionnement normal exécutant des opérations normales avant d'appeler à nouveau la commande de mise en attente d'activation.

2. Procédé selon la revendication 1,
**caractérisé en ce que** les traitements applicatifs comprennent une boucle de traitement infinie dans laquelle est inséré l'appel à la commande de mise en attente d'activation.

3. Procédé selon la revendication 1 ou 2,
**caractérisé en ce qu'**une commande d'activation d'un traitement en attente d'activation est associée à un paramètre de phase définissant l'intervalle de temps entre la date d'activation du traitement et un instant de référence.

4. Procédé selon l'une des revendications 1 à 3,
**caractérisé en ce qu'**à l'activation d'un traitement en attente d'activation, il comprend la transmission au traitement à activer d'un paramètre d'état qui est à une valeur normale pour indiquer au traitement qu'il doit exécuter des opérations normales, ou à une valeur de fin pour indiquer au traitement au traitement qu'il doit se terminer.

5. Procédé selon l'une des revendications 1 à 4,
**caractérisé en ce qu'**il comprend la fourniture par une horloge d'une date courante avec une dynamique limitée, la définition d'un instant de référence par un traitement applicatif et la mise à jour de l'instant de référence à chaque période du premier traitement périodique activé à la suite de ladite définition de l'instant de référence.

6. Procédé selon l'une des revendications 1 à 5,
**caractérisé en ce que** pour activer un traitement périodique en attente d'activation, la commande d'activation est associée à un paramètre de période définissant une période d'activation du traitement, et **en ce que** lors de l'activation d'un traitement périodique, le système de gestion du temps insère dans une liste d'événements à traiter, un événement d'activation associé à une date d'activation égale à la date courante à laquelle est ajoutée la période du traitement.

7. Procédé selon l'une des revendications 1 à 6,
**caractérisé en ce qu'**une commande d'activation d'un traitement est associée à un paramètre d'échéance définissant une durée maximale d'exécution d'un traitement, et **en ce que** le système de gestion du temps surveille si l'exécution du traitement est effectuée pendant cette durée.

8. Procédé selon la revendication 7,
**caractérisé en ce que** pour surveiller la durée d'exécution d'un traitement, le système de gestion du temps effectue les étapes consistant à :
- lors de l'activation d'un traitement, insérer dans une liste d'événements à traiter, un événement d'échéance de fin de traitement associé une date égale à la date courante à laquelle est ajoutée l'échéance du traitement,
- lors de la fin d'exécution du traitement, avant l'arrivée de l'événement d'échéance correspondant au traitement, retirer de la liste d'événements à traiter l'événement d'échéaace de fin de traitement,
- lors de l'arrivée de l'événement d'échéance de fin de traitement, la transmission à un traitement superviseur d'un message de dépassement d'échéance.

9. Procédé selon la revendication 7 ou 8,
**caractérisé en ce que** si un traitement en cours d'exécution est activé avant la fin de sa durée maximale d'exécution, le système de gestion du temps surveille si l'exécution du traitement est effectuée pendant une durée égale à n fois la durée maximale d'exécution dudit traitement, à partir de la date de première exécution dudit traitement, n étant le nombre d'activations dudit traitement effectuées les unes à la suite des autres.

10. Procédé selon l'une des revendications 1 à 9,
**caractérisé en ce que** pour chaque traitement, il comprend l'enregistrement dans un relevé d'observations datées, de toutes les actions du système de gestion du temps pour mettre le traitement en attente d'activation ou le sortir d'une attente d'activation.

11. Procédé selon la revendication 10,
**caractérisé en ce que** l'enregistrement de relevés d'observations est activé par une directive de compilation de code source lors de l'élaboration du système.

12. Procédé selon l'une des revendications 1 à 11,
**caractérisé en ce qu'**il comprend en outre la déclaration auprès du système de gestion du temps d'un traitement superviseur, et la prise en compte immédiate ou temporisée par le traitement superviseur d'événements émis par les autres traitements, le traitement superviseur étant activé à cet effet par le système de gestion du temps.

13. Procédé selon la revendication 12,
**caractérisé en ce qu'**il comprend la notification d'un événement par un traitement au traitement superviseur, cette notification étant associée à un délai maximum jusqu'à la notification suivante d'un autre événement effectuée par le même traitement après une séquence d'instructions dont l'exécution est à surveiller, et l'émission par le système de gestion du temps au traitement superviseur, d'un message de dépassement d'échéance partielle, si l'exécution de la séquence d'instructions n'est pas effectuée dans le délai maximum.

14. Procédé selon la revendication 12 ou 13,
**caractérisé en ce que** le système de gestion du temps surveille la durée mise par le traitement superviseur pour traiter un événement ou un message d'erreur, et en cas de dépassement d'un délai maximal, il appelle un traitement d'urgence.

15. Procédé selon l'une des revendications 1 à 14,
**caractérisé en ce qu'**il comprend en outre une étape de changement de mode de fonctionnement synchronisé, comprenant le blocage de l'activation de traitements concernés par le changement de mode, et l'activation de ces traitements avec des paramètres temporels correspondant au nouveau mode de fonctionnement et un paramètre de mode pour indiquer aux traitements dans quel mode ils doivent fonctionner.

16. Système temps réel comprenant des traitements applicatifs (2), une unité de traitement (12), un système d'exploitation temps réel (11), une horloge temps réel (13), et un système de gestion du temps (1) rassemblant des mécanismes (3) pour activer et désactiver les traitements applicatifs (2) à des instants déterminés, et surveiller l'exécution de ceux-ci, ces mécanismes étant réalisés d'une manière indépendante de l'unité de traitement (12), du système d'exploitation (11) et de l'horloge (13),
**caractérisé en ce que** chaque traitement applicatif comprend au moins un appel à une commande de mise en attente d'activation qui place le traitement dans un état inactif (23) dans lequel il est en attente d'activation par le système de gestion du temps (1), chaque traitement applicatif présentant en outre au moins un état actif (24) dans lequel il exécute des opérations normales, avant d'appeler à nouveau la commande de mise en attente d'activation, et un état de terminaison (25) dans lequel il exécute des opérations de terminaison avant de se terminer.

17. Système selon la revendication 16,
**caractérisé en ce qu'**il comprend une interface (6) entre les traitements applicatifs (2) et le système de gestion du temps (1), cette interface rassemblant des fonctions de gestion du temps appelées par les traitements applicatifs.

18. Système selon la revendication 17,
**caractérisé en ce que** l'interface (6) entre les traitements applicatifs (2) et le système de gestion du temps (1) comprend une fonction d'attente d'activation par laquelle le traitement qui l'appelle est placé à l'état inactif (23), et une fonction de déclenchement d'un traitement pour déclencher l'exécution d'un traitement à l'état inactif.

19. Système selon la revendication 18,
**caractérisé en ce que** la fonction de déclenchement d'un traitement reçoit en paramètres d'entrée un paramètre indiquant la date à laquelle l'exécution du traitement doit être déclenchée, un paramètre de période indiquant une période d'exécution si le traitement est périodique, un paramètre d'échéance déterminant la durée maximale d'exécution du traitement, un paramètre d'état indiquant si le traitement doit être exécuté normalement ou se terminer, et un paramètre de mode caractérisant l'exécution ou la terminaison du traitement.

20. Système selon l'une des revendications 16 à 19,
**caractérisé en ce que** l'interface (6) entre les traitements applicatifs (2) et le système de gestion du temps (1) comprend une fonction de gel de traitement pour empêcher l'activation d'un traitement en attente d'activation ou signaler le retour d'un traitement à l'état inactif si celui-ci n'est pas en attente d'activation.

21. Système selon l'une des revendications 16 à 20,
**caractérisé en ce que** tous les accès nécessaires au système de gestion du temps aux fonctions du système d'exploitation et de l'horloge sont regroupés dans des interfaces (7, 8, 9) réalisées en fonction du système d'exploitation (11), de l'unité de traitement (12) et de l'horloge (13).

22. Système selon l'une des revendications 16 à 21,
**caractérisé en ce qu'**il comprend un chien de garde pour surveiller l'exécution des opérations effectuées par le système de gestion du temps (1), et dont la mise à jour est synchronisée sur la commande d'un compteur (33) destiné à déclencher le prochain événement à traiter.

## Claims

1. Method of time management in a real-time system in which application processes are executed and communicate with one another with the aid of commands transmitted to a time management system, the commands transmitted by the application processes to the time management system comprising commands for activating an application process at a determined activation date, the time management system performing for each activation command received steps of:
- consideration of the command for activating an application process,
- associating with the command an activation event to which is allocated at least one deadline date for the event corresponding to the date of activation of the application process, and inserting the event in association with its deadline date into a list of events to be processed,
- determining in the list of events the next event to be processed as a function of the respective deadline dates of the events of the list, and activating a counter (33) so that it triggers at the deadline date of the next event to be processed, and
- when the counter triggers, activating the application process associated with the next event to be processed,
**characterized in that** each application process comprises at least one call to an activation standby command which places the process in a state of standby of activation by the time management system, the application process once activated in a normal operating mode executing normal operations before again calling the activation standby command.

2. Method according to Claim 1,
**characterized in that** the application processes comprise an infinite processing loop in which the call to the activation standby command is inserted.

3. Method according to Claim 1 or 2,
**characterized in that** a command for activating a process on activation standby is associated with a phase parameter defining the time interval between the date of activation of the process and a reference instant.

4. Method according to one of Claims 1 to 3,
**characterized in that** upon the activation of a process on activation standby, it comprises the transmission to the process to be activated of a state parameter which is at a normal value to indicate to the process that it must execute normal operations, or at an end value to indicate to the process that it must terminate.

5. Method according to one of Claims 1 to 4,
**characterized in that** it comprises the provision by a clock of a current date with a limited dynamic swing, the definition of a reference instant by an application process and the updating of the reference instant with each period of the first periodic process activated following the said definition of the reference instant.

6. Method according to one of Claims 1 to 5,
**characterized in that** to activate a periodic process on activation standby, the activation command is associated with a period parameter defining a period of activation of the process, and **in that** upon the activation of a periodic process, the time management system inserts into a list of events to be processed, an activation event associated with an activation date equal to the current date to which the period of the process is added.

7. Method according to one of Claims 1 to 6,
**characterized in that** a command for activating a process is associated with a deadline parameter defining a maximum duration of execution of a process, and **in that** the time management system monitors whether the execution of the process is performed for this duration.

8. Method according to Claim 7, **characterized in that** to monitor the duration of execution of a process, the time management system performs the steps consisting in:
- upon the activation of a process, inserting into a list of events to be processed, an end of processing deadline event associated with a date equal to the current date to which the deadline of the process is added,
- upon the end of execution of the process, before the occurrence of the deadline event corresponding to the process, removing from the list of events to be processed the end of processing deadline event,
- upon the occurrence of the end of processing deadline event, the transmission to a supervisor process of a deadline overshoot message.

9. Method according to Claim 7 or 8,
**characterized in that** if a process undergoing execution is activated before the end of its maximum duration of the execution, the time management system monitors whether the execution of the process is performed for a duration equal to n times the maximum duration of execution of the said process, starting from the date of first execution of the said process, n being the number of activations of the said process that are performed one after the other.

10. Method according to one of Claims 1 to 9,
**characterized in that** for each process, it comprises the recording in a journal of dated observations, of all the actions of the time management system so as to place the process on activation standby or take it off activation standby.

11. Method according to Claim 10,
**characterized in that** the recording of journals of observations is activated by a source code compilation directive upon setup of the system.

12. Method according to one of Claims 1 to 11,
**characterized in that** it furthermore comprises the declaration to the time management system of a supervisor process, and the immediate or deferred consideration by the supervisor process of events issued by the other processes, the supervisor process being activated for this purpose by the time management system.

13. Method according to Claim 12,
**characterized in that** it comprises the notification of an event by a process to the supervisor process, this notification being associated with a maximum delay until the next notification of another event, performed by the same process after a sequence of instructions whose execution is to be monitored, and the issuing by the time management system to the supervisor process, of a message of partial deadline overshoot, if the execution of the sequence of instructions is not performed within the maximum delay.

14. Method according to Claim 12 or 13,
**characterized in that** the time management system monitors the duration taken by the supervisor process to process an event or an error message, and in case of overshoot of a maximum delay, it calls an emergency process.

15. Method according to one of Claims 1 to 14,
**characterized in that** it furthermore comprises a step of synchronized operating mode change, comprising the disabling of the activation of processes concerned by the mode change, and the activation of these processes with time parameters corresponding to the new operating mode and a mode parameter for indicating to the processes the mode in which they must operate.

16. Real-time system comprising application processes (2), a processing unit (12), a real-time operating system (11), a real-time clock (13), and a time management system (1) mustering mechanisms (3) for activating and deactivating the application processes (2) at determined instants, and monitoring the execution thereof, these mechanisms being effected in a manner independent of the processing unit (12), of the operating system (11) and of the clock (13),
**characterized in that** each application process comprises at least one call to an activation standby command which places the process in an inactive state (23) in which it is in on activation standby by the time management system (1), each application process furthermore exhibiting at least one active state (24) in which it executes normal operations, before again calling the activation standby command, and a termination state (25) in which it executes termination operations before terminating.

17. System according to Claim 16,
**characterized in that** it comprises an interface (6) between the application processes (2) and the time management system (1), this interface mustering time management functions called by the application processes.

18. System according to Claim 17,
**characterized in that** the interface (6) between the application processes (2) and the time management system (1) comprises an activation standby function through which the process which calls it is placed in the inactive state (23), and a function of triggering a process so as to trigger the execution of a process in the inactive state.

19. System according to Claim 18,
**characterized in that** the function for triggering a process receives as input parameters a parameter indicating the date at which the execution of the process must be triggered, a period parameter indicating a period of execution if the process is periodic, a deadline parameter determining the maximum duration of execution of the process, a state parameter indicating whether the process must be executed normally or terminate, and a mode parameter, characterizing the execution or the termination of the process.

20. System according to one of Claims 16 to 19,
**characterized in that** the interface (6) between the application processes (2) and the time management system (1) comprises a process blocking function for preventing the activation of a process on activation standby or signalling the return of a process to the inactive state if the latter is not on activation standby.

21. System according to one of Claims 16 to 20,
**characterized in that** all the accesses necessary to the time management system to the functions of the operating system and of the clock are grouped together in interfaces (7, 8, 9) effected as a function of the operating system (11), of the processing unit (12) and of the clock (13).

22. System according to one of Claims 16 to 21,
**characterized in that** it comprises a watchdog for monitoring the execution of the operations performed by the time management system (1), and the updating of which is synchronized with the command of a counter (33) intended to trigger the next event to be processed.

## Patentansprüche

1. Verfahren zur Zeitverwaltung in einem Echtzeitsystem, bei dem Anwenderprogramme ausgeführt werden und mit Hilfe von einem Zeitverwaltungssystem übertragenen Befehlen miteinander kommunizieren, wobei die von den Anwenderprogrammen dem Zeitverwaltungssystem übertragenen Befehle Befehle zum Aktivieren eines Anwenderprogramms zu einem bestimmten Aktivierungszeitpunkt enthalten, wobei das Zeitverwaltungssystem bei jedem empfangenen Aktivierungsbefehl die folgenden Schritte ausführt:
- Berücksichtigen des Befehls zum Aktivieren eines Anwenderprogramms,
- Zuordnen eines Aktivierungsereignisses zum Befehl, welchem Ereignis zumindest ein Ereignisfälligkeitszeitpunkt zugewiesen ist, der dem Zeitpunkt zum Aktivieren des Anwenderprogramms entspricht, und Einfügen des Ereignisses in Verbindung mit seinem Fälligkeitszeitpunkt in eine Liste zu verarbeitender Ereignisse,
- Bestimmen des nächstfolgenden Ereignisses aus der Ereignisliste, das in Abhängigkeit von den jeweiligen Fälligkeitszeitpunkten der Ereignisse aus der Liste zu verarbeiten ist, und Aktivieren eines Zählers (33), damit dieser am Fälligkeitszeitpunkt des nächstfolgenden zu verarbeitenden Ereignisses auslöst, und
- bei Auslösen des Zählers Aktivieren des dem nächstfolgenden zu verarbeitenden Ereignis zugeordneten Anwenderprogramms,
**dadurch gekennzeichnet, dass** jedes Anwenderprogramm zumindest einen Aufruf eines Aktivierungsrückstellbefehls umfasst, der das Programm über das Zeitverwaltungssystem in einen Aktivierungsrückstellzustand bringt, wobei das Anwenderprogramm, wenn es in einem normalen Betriebsmodus aktiviert wurde, normale Operationen durchführt, bevor es erneut den Aktivierungsrückstellbefehl aufruft.

2. Verfahren nach Anspruch 1,
**dadurch gekennzeichnet, dass** die Anwenderprogramme eine Anwendungsendlosschleife enthalten, in welche der Aufruf des Aktivierungsrückstellbefehls eingefügt ist.

3. Verfahren nach Anspruch 1 oder 2,
**dadurch gekennzeichnet, dass** einem Aktivierungsbefehl für eine Anwendung in Aktivierungserwartung ein Phasenparameter zugeordnet ist, der den Zeitraum zwischen Zeitpunkt für die Aktivierung der Anwendung und einen Bezugszeitpunkt definiert.

4. Verfahren nach einem der Ansprüche 1 bis 3,
**dadurch gekennzeichnet, dass** es bei Aktivierung einer Anwendung in Aktivierungserwartung die Übertragung eines Zustandsparameters zur zu aktivierenden Anwendung umfasst, der auf einem Normalwert liegt, um der Anwendung zu melden, dass es normale Operationen durchführen soll, oder auf einem Endwert, um der Anwendung zu melden, dass sie sich beenden soll.

5. Verfahren nach einem der Ansprüche 1 bis 4,
**dadurch gekennzeichnet, dass** es die Bereitstellung eines Zeitgebers für einen laufenden Zeitraum mit begrenzter Dynamik, die Definition eines Referenzzeitpunkts über ein Anwenderprogramm und die Aktualisierung des Referenzzeitpunkts zu jedem Zeitraum der ersten periodischen Anwendung umfasst, die der genannten Definition des Referenzzeitpunkts folgend aktiviert wird.

6. Verfahren nach einem der Ansprüche 1 bis 5,
**dadurch gekennzeichnet, dass** zum Aktivieren einer periodischen Anwendung in Aktivierungserwartung dem Aktivierungsbefehl ein Zeitraumparameter zugeordnet ist, der ein Aktivierungszeitraum für die Anwendung definiert, und dass bei Aktivierung einer periodischen Anwendung das Zeitverwaltungssystem in eine Liste zu verarbeitender Ereignisse ein Aktivierungsereignis einfügt, das einem Aktivierungszeitpunkt zugeordnet ist, der dem laufenden Zeitraum entspricht, dem der Zeitraum der Anwendung hinzugefügt ist.

7. Verfahren nach einem der Ansprüche 1 bis 6,
**dadurch gekennzeichnet, dass** dem Aktivierungsbefehl für eine Anwendung ein Fälligkeitsparameter zugeordnet ist, der eine maximale Zeitdauer zum Durchführen einer Anwendung definiert, und dass das Zeitverwaltungssystem überwacht, ob die Durchführung der Anwendung während dieser Zeitdauer erfolgt.

8. Verfahren nach Anspruch 7,
**dadurch gekennzeichnet, dass** zum Überwachen der Zeitdauer zum Durchführen einer Anwendung das Zeitverwaltungssystem Schritte ausführt, die darin bestehen,
- bei Aktivierung einer Anwendung in eine Liste zu verarbeitender Ereignisse ein Fälligkeitsereignis zum Beenden der Anwendung einzufügen, dem ein Zeitpunkt zugeordnet ist, der dem laufenden Zeitraum entspricht, dem die Fälligkeit der Anwendung hinzugefügt ist,
- bei Beendigung der Durchführung der Anwendung, und zwar bevor das zur Anwendung entsprechende Fälligkeitsereignis gelangt, das Fälligkeitsereignis zum Beenden der Anwendung von der Liste der zu verarbeitenden Ereignisse zurückzunehmen,
- bei Auftreten des Fälligkeitsereignisses zum Beenden der Anwendung, eine Fälligkeitsüberschreitungsmeldung zu einem Supervisor-Programm zu übertragen.

9. Verfahren nach Anspruch 7 oder 8,
**dadurch gekennzeichnet, dass** dann, wenn eine gerade erfolgende Anwendung vor Ablauf ihrer maximalen Durchführungsdauer aktiviert wird, das Zeitverwaltungssystem überwacht, ob die Durchführung der Anwendung während einer Zeitdauer gleich der n-fachen maximalen Zeitdauer der Durchführung der genannten Anwendung ab dem Zeitpunkt der ersten Durchführung der genannten Anwendung erfolgt, wobei n die Anzahl von Aktivierungen der genannten Anwendung ist, die aufeinanderfolgend durchgeführt werden.

10. Verfahren nach einem der Ansprüche 1 bis 9,
**dadurch gekennzeichnet, dass** es für jede Anwendung die Registrierung sämtlicher Tätigkeiten des Zeitverwaltungssystems in einer Aufstellung datierter Beobachtungen umfasst, um die Anwendung in Aktivierungserwartung zu versetzen oder sie aus einer Aktivierungserwartung herauszunehmen.

11. Verfahren nach Anspruch 10,
**dadurch gekennzeichnet, dass** die Registrierung der Beobachtungsaufstellungen über eine Quellcode-Kompilierungsregel bei der Systementwicklung aktiviert wird.

12. Verfahren nach einem der Anspruche 1 bis 11,
**dadurch gekennzeichnet, dass** es ferner die Anweisung eines Supervisor-Programms bei dem Zeitverwaltungssystem und die unmittelbare oder verzögerte Berücksichtigung von Ereignissen durch das Supervisor-Programm umfasst, die von den weiteren Anwendungen erstellt werden, wobei das Supervisor-Programm dazu über das Zeitverwaltungssystem aktiviert wird.

13. Verfahren nach Anspruch 12,
**dadurch gekennzeichnet, dass** es die Zustellung eines Ereignisses zu dem Supervisor-Programm über eine Anwendung umfasst, wobei dieser Zustellung eine maximale Frist bis zur nächsten Zustellung eines weiteren Ereignisses zugeordnet ist, die über die gleiche Anwendung nach einer Folge von Anweisungen erfolgt ist, deren Ausführung zu überwachen ist, sowie das Ausgeben einer Teilfälligkeitsüberschreitungsmeldung von dem Zeitverwaltungssystem zum Supervisor-Programm, wenn die Ausführung der Folge von Anweisungen nicht in der maximalen Frist erfolgt ist.

14. Verfahren nach Anspruch 12 oder 13,
**dadurch gekennzeichnet, dass** das Zeitverwaltungssystem die Zeitdauer überwacht, welche das Supervisor-Programm braucht, um ein Ereignis oder eine Fehlermeldung zu verarbeiten, wobei es im Falle des Überschreitens einer maximalen Frist ein Notprogramm aufruft.

15. Verfahren nach einer dem Ansprüche 1 bis 14,
**dadurch gekennzeichnet, dass** es ferner einen Schritt zum Wechseln des getakteten Betriebsmodus umfasst, der das Blockieren der Aktivierung der von dem Moduswechsel betroffenen Anwendungen und die Aktivierung dieser Anwendungen mit Zeitparametern umfasst, die dem neuen Betriebsmodus entsprechen, sowie mit einem Modusparameter, um den Anwendungen anzugeben, in welchem Modus sie arbeiten sollen.

16. Echtzeitsystem mit Anwenderprogrammen (2), einer Verarbeitungseinheit (12), einem Echtzeitbetriebssystem (11), einem Echtzeit-Zeitgeber (13) und einem Zeitverwaltungssystem (1), das Einrichtungen (3) zum Aktivieren und Deaktivieren der Anwenderprogramme (2) zu bestimmten Zeitpunkten und zum Ausführen derselben zusammenfügt, wobei diese Einrichtungen in einer von der Verarbeitungseinheit (12), vom Betriebssystem (11) und von dem Zeitgeber (13) unabhängigen Art und Weise ausgeführt sind,
**dadurch gekennzeichnet, dass** jedes Anwenderprogramm zumindest einen Aufruf eines Aktivierungsrückstellbefehls umfasst, der die Anwendung in einen inaktiven Zustand (23) bringt, in dem sie in Erwartung einer Aktivierung durch das Zeitverwaltungssystem (1) ist, wobei jedes Anwenderprogramm ferner zumindest einen aktiven Zustand (24) aufweist, in dem es normale Operationen ausführt, bevor es erneut den Aktivierungsrückstellbefehl aufruft, sowie einen Beendigungszustand (25), in dem es Beendigungsoperationen ausführt, bevor es sich selbst beendet.

17. System nach Anspruch 16,
**dadurch gekennzeichnet, dass** es eine Schnittstelle (6) zwischen den Anwenderprogrammen (2) und dem Zeitverwaltungssystem (1) enthält, wobei diese Schnittstelle Zeitverwaltungsfunktionen vereint, die von den Anwenderprogrammen aufgerufen werden.

18. System nach Anspruch 17,
**dadurch gekennzeichnet, dass** die Schnittstelle (6) zwischen den Anwenderprogrammen (2) und dem Zeitverwaltungssystem (1) eine Aktivierungsrückstellfunktion enthält, über welche die Anwendung, welche diese aufruft, in den inaktiven Zustand (23) gebracht wird, sowie eine Auslösefunktion für eine Anwendung, um die Ausführung einer Anwendung im inaktiven Zustand auszulösen.

19. System nach Anspruch 18,
**dadurch gekennzeichnet, dass** die Funktion zum Auslösen einer Anwendung als Eingangsparameter einen Parameter annimmt, welcher den Zeitpunkt angibt, an dem die Ausführung der Anwendung ausgelöst werden soll, einen Zeitdauerparameter, der eine Ausführungszeitdauer angibt, wenn die Anwendung periodisch ist, einen Fälligkeitsparameter, der die maximale Zeitdauer der Ausführung der Anwendung bestimmt, einen Zustandsparameter, der angibt, ob die Anwendung normal ausgeführt oder beendet werden soll, und einen Modusparameter, der die Ausführung bzw. Beendigung der Anwendung kennzeichnet.

20. System nach einem der Ansprüche 16 bis 19,
**dadurch gekennzeichnet, dass** die Schnittstelle (6) zwischen den Anwenderprogrammen (2) und dem Zeitverwaltungssystem (1) eine Funktion zum Einfrieren der Anwendung enthält, um die Aktivierung einer Anwendung in Aktivierungserwartung zu verhindern oder die Rückkehr einer Anwendung in den inaktiven Zustand zu melden, wenn diese nicht in Aktivierungserwartung ist.

21. System nach einem der Ansprüche 16 bis 20,
**dadurch gekennzeichnet, dass**
sämtliche Zugänge zu dem Zeitverwaltungssystem, zu den Funktionen des Betriebssystems und zu dem Zeitgeber, die erforderlich sind, in Schnittstellen (7, 8, 9) zusammengestellt sind, die in Abhängigkeit von dem Betriebssystem (11), der Verarbeitungseinheit (12) und dem Zeitgeber (13) ausgeführt sind.

22. System nach einem der Ansprüche 16 bis 21,
**dadurch gekennzeichnet, dass** es einen Wächter enthält, um die Ausführung der von dem Zeitverwaltungssystem (1) durchgeführten Operationen zu überwachen, dessen Aktualisierung auf Kommando eines Zählers (33) getaktet ist, der dazu bestimmt ist, das nächstfolgende zu verarbeitende Ereignis auszulösen.
